# EUROPÄISCHE PATENTSCHRIFT

(11) **EP 4 384 357 B1**
(45) Veröffentlichungstag und Bekanntmachung des Hinweises auf die Patenterteilung: **03.09.2025**
(21) Anmeldenummer: 22764769.0
(22) Anmeldetag: 12.08.2022
(51) Int. Cl.: B25J 9/00

(54) **EXOSKELETT UND VERFAHREN**
EXOSKELETON AND METHOD
EXOSQUELETTE ET PROCÉDÉ

(30) Priorität: 13.08.2021 DE 102021208907
(43) Veröffentlichungstag der Anmeldung: 19.06.2024
(60) Teilanmeldung: 25189970.4
(73) Patentinhaber: Festool GmbH, 73240 Wendlingen (DE)
(72) Erfinder: LÜGGER, Johannes, 22041 Hamburg (DE); HAMMER, Jan, 89275 Elchingen (DE); BUNNIK, Edwin, 89081 Ulm (DE); OTTEN, Bernward, 20099 Hamburg (DE)
(74) Vertreter: Patentanwälte Magenbauer & Kollegen Partnerschaft mbB
(86) Internationale Anmeldenummer: PCT/EP2022/072720
(87) Internationale Veröffentlichungsnummer: WO 2023/017177

(56) Entgegenhaltungen:
- EP-B1- 2 931 484
- WO-A1-2021/087393
- US-A1- 2020 238 542

## Beschreibung

Die Erfindung betrifft ein Exoskelett, umfassend: einen Basisabschnitt zur Anbringung an einen Torso eines menschlichen Körpers, einen Unterstützungsabschnitt zur Unterstützung eines Arms des menschlichen Körpers, eine auf den Unterstützungsabschnitt wirkende, insbesondere pneumatische, Aktoreinrichtung zur Bereitstellung einer Unterstützungskraft für den Arm, und eine Schultergelenkanordnung, über die der Unterstützungsabschnitt beweglich an den Basisabschnitt gekoppelt ist, wobei die Schultergelenkanordnung ein Hebe-Drehlager umfasst, über das der Unterstützungsabschnitt um eine horizontale Hebeachse verschwenkbar an der Schultergelenkanordnung gelagert ist.

Exoskelette sind aus der WO2020038850A1, EP3189945A1, US10383785B2, EP2931484B1, WO2017167349A1, EP2858791B1, DE2615209A1 und US10918559B2 bekannt.

Die EP 2 931 484 B1 betrifft ein adaptives Arm-Unterstützungs-System mit einer Arm-Unterstützungs-Anordnung, die um eine im Wesentlichen vertikale Achse rotierbar ist, ungefähr entlang eines gekrümmten Spurrotationspfads.

Eine Aufgabe besteht darin, dem Anwender das Arbeiten mit dem Exoskelett zu erleichtern, insbesondere durch eine Verbesserung der Bewegungsfreiheit, des Bewegungsumfangs und/oder des Tragekomforts.

Die Aufgabe wird gelöst durch ein Exoskelett gemäß Anspruch 1. Die Schultergelenkanordnung des Exoskeletts umfasst eine Gelenkkette, die für das Hebe-Drehlager eine gekrümmte Bewegungsbahn relativ zum Basisabschnitt definiert. Die Bewegungsbahn liegt zweckmäßigerweise in einer Ebene, insbesondere in einer horizontalen Ebene. Die Bewegungsbahn weist eine sich entlang der Bewegungsbahn ändernde Krümmung auf, so dass die Bewegungsbahn nicht kreisabschnittsförmig ist.

Durch die Definition der gekrümmten Bewegungsbahn kann dem Anwender zusätzlich zur horizontalen Hebeachse ein weiterer Freiheitsgrad bereitgestellt werden, um seinen von dem Unterstützungsabschnitt unterstützten Arm im Raum zu bewegen, insbesondere horizontal. Gleichzeitig bleibt die Fähigkeit des Exoskeletts erhalten, Kräfte in verschiedenen Raumrichtungen, insbesondere auch Kräfte in horizontalen Raumrichtungen, mit dem Unterstützungsabschnitt aufzunehmen und über die Schultergelenkanordnung an den Basisabschnitt abzuleiten. Beispielsweise können bei einer in einer horizontalen Ebene liegenden gekrümmten Bewegungsbahn Kräfte in sämtlichen Raumrichtungen, die nicht parallel zu der Bahnrichtung gemäß der aktuellen Bahnposition des Hebe-Drehlagers auf der gekrümmten Bewegungsbahn sind, mit dem Unterstützungsabschnitt aufgenommen und an den Basisabschnitt abgeleitet werden.

Über das Hebe-Drehlager kann der Anwender mit seinem am Unterstützungsabschnitt befestigten Arm (zusammen mit dem Unterstützungsabschnitt) eine Hebebewegung um die durch das Hebe-Drehlager definierte horizontale Hebeachse durchführen. Aufgrund der menschlichen Anatomie bewegt sich bei einer solchen Hebebewegung die menschliche Schulter nach vorne. Dies kann bei einem konventionellen Exoskelett dazu führen, dass die horizontale Hebeachse und eine horizontale Schultergelenkachse der menschlichen Schulter stark voneinander abweichen, wodurch Bewegungsfreiheit, Bewegungsumfang und/oder Tragekomfort des Anwenders eingeschränkt werden können. Über die Definition der gekrümmten Bewegungsbahn kann insbesondere erzielt werden, dass sich bei der Hebebewegung das Hebe-Drehlager - und somit auch die horizontale Hebeachse - zusammen mit der menschlichen Schulter nach vorne bewegen können, insbesondere derart, dass die horizontale Hebeachse gemäß der horizontalen Schultergelenkachse bewegt wird und zweckmäßigerweise eine Korrespondenz zwischen der horizontalen Hebeachse und der horizontalen Schwenkachse erhalten bleibt.

Bevorzugt ist die Gelenkkette komplett passiv ausgeführt. Die Gelenkkette kann auch als Schulterkinematik bezeichnet werden.

Zweckmäßigerweise ist die gekrümmte Bewegungsbahn im Betrieb der einzige Freiheitsgrad der Hebeachse relativ zum Basisabschnitt. Insbesondere definiert die Gelenkkette für das Hebe-Drehlager nur eine einzige Bewegungsbahn - und zwar die gekrümmte Bewegungsbahn. Insbesondere verfügt der Unterstützungsabschnitt relativ zum Basisabschnitt im Betrieb nur über zwei Freiheitsgrade - als ersten Freiheitsgrad eine Rotation um die Hebeachse und als zweiten Freiheitsgrad eine Bewegung (zusammen mit dem Hebe-Drehlager) entlang der gekrümmten Bewegungsbahn. Bevorzugt umfasst der zweite Freiheitsgrad eine mit der Position entlang der gekrümmten Bewegungsbahn gekoppelte Rotation um eine auf der gekrümmten Bewegungsbahn liegenden gedachten vertikalen Drehachse. Diese gekoppelte Rotation kann zweckmäßigerweise nicht unabhängig von der Positionierung entlang der Bewegungsbahn durchgeführt werden, weswegen diese Rotation und diese Position zusammen nur einen einzigen Freiheitsgrad - den zweiten Freiheitsgrad - des Unterstützungsabschnitts relativ zum Basisabschnitt darstellen.

Vorteilhafte Weiterbildungen sind Gegenstand der Unteransprüche.

Die Erfindung betrifft ferner ein Verfahren gemäß Anspruch 15.

Weitere exemplarische Details sowie beispielhafte Ausführungsformen werden nachstehend unter Bezugnahme auf die Figuren erläutert. Dabei zeigt
- Figur 1: eine schematische Seitenansicht einer Exoskelett-Vorrichtung,
- Figur 2: eine schematische Seitenansicht eines von einem Anwender getragenen Exoskeletts,
- Figur 3: eine schematische Detailansicht eines Unterstützungsabschnitts des Exoskeletts,
- Figur 4: eine schematische Rückansicht des Exoskeletts,
- Figur 5: eine perspektivische Ansicht einer exemplarischen Ausgestaltung eines Exoskeletts,
- Figur 6: eine perspektivische Ansicht einer Schultergelenkanordnung,
- Figur 7: eine schematische Draufsicht auf eine Schultergelenkanordnung in einer ersten Stellung,
- Figur 8: eine schematische Draufsicht auf die Schultergelenkanordnung in einer zweiten Stellung,
- Figur 9: eine schematische Draufsicht auf die Schultergelenkanordnung in einer dritten Stellung,
- Figur 10: eine weitere schematische Draufsicht auf eine Schultergelenkanordnung in der ersten Stellung,
- Figur 11: eine weitere schematische Draufsicht auf die Schultergelenkanordnung in der dritten Stellung,
- Figur 12: eine perspektivische Ansicht der Schultergelenkanordnung in der ersten Stellung,
- Figur 13: eine perspektivische Ansicht der Schultergelenkanordnung in einer umgeklappten Stellung,
- Figur 14: ein Exoskelett in einer Verstaukonfiguration in einem Behälter,
- Figur 15: eine perspektivische Ansicht eines als Systemkiste ausgeführten Behälters,
- Figur 16: einen Stapel aus mehreren Behältern,
- Figur 17: eine Draufsicht auf das Exoskelett, und
- Figur 18: eine schematische Darstellung von Abständen zwischen Drehachsen einer Gelenkkette.

Bei den nachfolgenden Erläuterungen wird Bezug genommen auf die in den Figuren eingezeichneten, orthogonal zueinander ausgerichteten Raumrichtungen x-Richtung, y-Richtung und z-Richtung. Die z-Richtung kann auch als Vertikalrichtung, die x-Richtung als Tiefenrichtung und die y-Richtung als Breitenrichtung bezeichnet werden.

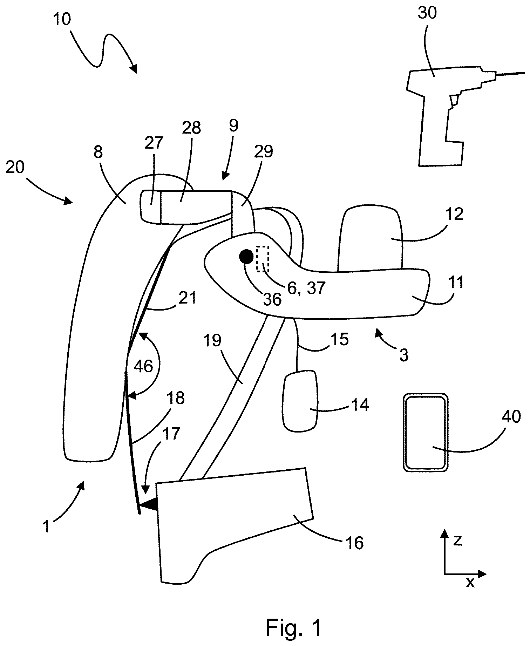

Die Figur 1 zeigt eine schematische Darstellung einer Exoskelett-Vorrichtung 10, die ein Exoskelett 20 sowie optional ein Werkzeug 30 und/oder ein Mobilgerät 40 umfasst. Das Exoskelett 20 kann auch für sich genommen bereitgestellt sein. Das Werkzeug 30 und/oder das Mobilgerät 40 sind exemplarisch separat von dem Exoskelett 20 vorhanden, also insbesondere nicht mechanisch mit dem Exoskelett 20 verbunden. Bei dem Werkzeug 30 handelt es sich beispielsweise um ein Elektrowerkzeug, insbesondere um einen Akkuschrauber und/oder eine Bohrmaschine und/oder eine Schleifmaschine. Das Mobilgerät 40 ist vorzugsweise ein Smartphone oder ein Tablet. Optional ist das Exoskelett 20 ausgebildet, mit dem Werkzeug 30 und/oder dem Mobilgerät 40 zu kommunizieren, insbesondere drahtlos.

Exemplarisch ist das Exoskelett 20 in einer aufrechten Ausrichtung mit seiner Vertikalachse (die insbesondere parallel zu einer Basisabschnitt-Achse 62 verläuft) parallel zur z-Richtung ausgerichtet. Insbesondere ist das Exoskelett 20 in der aufrechten Ausrichtung mit seiner Sagitalachse parallel zur x-Richtung ausgerichtet. Die Sagitalachse des Exoskeletts 20 verläuft in einem Zustand, in dem der Anwender das Exoskelett 20 angelegt hat, parallel zur Sagitalachse des Anwenders, also insbesondere parallel zu einer Richtung von hinten - also insbesondere dem Rücken des Anwenders - nach vorne - also insbesondere der Brust des Anwenders. Die Horizontalachse des Exoskeletts 20 verläuft insbesondere in Breitenrichtung des Exoskeletts 20 und/oder parallel zur y-Richtung. Die Horizontalachse des Exoskeletts 20 verläuft in einem Zustand, in dem der Anwender das Exoskelett 20 angelegt hat, parallel zur Horizontalachse des Anwenders, also insbesondere parallel zu einer Richtung von einer ersten Schulter des Anwenders zu einer zweiten Schulter des Anwenders. Die Vertikalachse des Exoskeletts 20, Sagitalachse des Exoskeletts 20 und die Horizontalachse des Exoskeletts 20 sind orthogonal zueinander ausgerichtet.

Die Exoskelett-Vorrichtung 10 ist insbesondere für den handwerklichen und/oder den industriellen Einsatz ausgebildet. Vorzugsweise ist die Exoskelett-Vorrichtung 10 nicht für einen medizinischen und/oder nicht für einen therapeutischen Einsatz ausgebildet.

Das Exoskelett 20 ist ein aktives Exoskelett und verfügt insbesondere über eine interne Energiequelle, aus der die Energie für die Unterstützungskraft bereitgestellt wird. Insbesondere ist das Exoskelett 20 ein aktives Exoskelett zur aktiven Unterstützung des Schultergelenks des Anwenders.

Das Exoskelett 20 umfasst einen Basisabschnitt 1, der zur Anbringung an einen Körperabschnitt eines menschlichen Körpers eines Anwenders dient. Exemplarisch dient der Basisabschnitt 1 dazu, an den Torso 2 des menschlichen Körpers angebracht zu werden.

Der Basisabschnitt 1 umfasst einen Hauptabschnitt und ein textiles Tragesystem, das insbesondere lösbar an dem Hauptabschnitt angebracht ist. Der Hauptabschnitt dient exemplarisch dazu, mittels des textilen Tragesystems an dem Rücken des menschlichen Körpers getragen zu werden, insbesondere rucksackartig. Der Hauptabschnitt umfasst ein Rückenteil 8, das insbesondere länglich ausgeführt ist und das zweckmäßigerweise mit seiner Längsachse vertikal und/oder in Längsrichtung des Rückens des Anwenders ausgerichtet ist.

Beispielsweise erstreckt sich die Längsrichtung des Rückenteils 8 entlang der Längsrichtung des Rückens. Der Hauptabschnitt umfasst ferner ein insbesondere leistenförmiges und/oder steifes Kraftübertragungselement 18, das sich von dem Rückenteil 8 nach unten hin zu einem Beckengurt 16 erstreckt, um das Rückenteil 8 mechanisch mit dem Beckengurt 16 zu koppeln. Das Kraftübertragungselement 18 dient zweckmäßigerweise dazu, um eine von einem Unterstützungsabschnitt 3 auf das Rückenteil 8 übertragene Reaktionskraft weiter zum Beckengurt 16 zu übertragen. Exemplarisch ist das Rückenteil 8 schlauchförmig und/oder rucksackförmig ausgeführt. Das Rückenteil 8 ist insbesondere steif ausgeführt. Insbesondere umfasst das Rückenteil 8 ein zweckmäßigerweise steifes Rückenteil-Gehäuse, das beispielsweise aus einem insbesondere steifen Kunststoff und/oder als Hartschale gefertigt ist. Das Rückenteil 8 dient zweckmäßigerweise dazu, eine Kraft von dem Unterstützungsabschnitt 3 an das Kraftübertragungselement 18 zu übertragen und/oder Komponenten für die Steuerung der Unterstützungskraft aufzunehmen.

Der Unterstützungsabschnitt 3 kann zweckmäßigerweise als Armaktor bezeichnet werden.

Das Kraftübertragungselement 18 ist exemplarisch schwertförmig ausgeführt und kann auch als Schwert bezeichnet werden. Zweckmäßigerweise ist das Kraftübertragungselement 18 relativ zum Rückenteil 8 verstellbar ausgeführt, um insbesondere die vertikale Erstreckung des Hauptabschnitts und/oder einen dem Rücken des Anwenders zugewandten Kraftübertragungselement-Winkel 46 zwischen dem Kraftübertragungselement 18 und dem Rückenteil 8 zu verändern. Zweckmäßigerweise ist das Kraftübertragungselement 18 translatorisch und/oder rotatorisch beweglich relativ zum Rückenteil 8 gelagert und insbesondere in verschiedene translatorische und/oder rotatorische Stellungen relativ zum Rückenteil 8 versetzbar und insbesondere verriegelbar. Die translatorische Bewegung erfolgt insbesondere vertikal. Die rotatorische Bewegung erfolgt zweckmäßigerweise um eine parallel zur y-Richtung ausgerichtete Verstellachse.

Das textile Tragesystem umfasst exemplarisch den Beckengurt 16 und/oder wenigstens einen, vorzugsweise zwei, Schultergurte 19. Der Beckengurt 16 bildet zweckmäßigerweise eine Schlaufe, so dass er im getragenen Zustand den Torso 2, insbesondere die Hüfte, des Anwenders umschließt. Jeder Schultergurt 19 verläuft exemplarisch vom Hauptabschnitt, insbesondere vom Rückenteil 8, hin zum Beckengurt 16, und zwar zweckmäßigerweise im getragenen Zustand des Exoskeletts 20 über eine jeweilige Schulter des Anwenders.

Das Exoskelett 20 umfasst ferner exemplarisch ein Kraftübertragungselement-Gelenk 17, über das das Kraftübertragungselement 18 an dem Beckengurt 16 angebracht ist. Das Kraftübertragungselement-Gelenk 17 ist beispielsweise als Kugelgelenk ausgeführt und kann als Sakrumgelenk bezeichnet werden. Im getragenen Zustand des Exoskeletts 20 ist das Kraftübertragungselement-Gelenk 17 im unteren Rückenbereich des Anwenders angeordnet, insbesondere in Breitenrichtung zentriert.

Das textile Tragesystem umfasst exemplarisch ferner ein Rückennetz 21, das an der dem Rücken des Anwenders zugewandten Seite des Rückenteils 8 angeordnet ist. Im getragenen Zustand des Exoskeletts 20 liegt das Rückennetz 21 an dem Rücken des Anwenders an, insbesondere zumindest teilweise und/oder im oberen Rückenbereich.

Das Exoskelett 20 umfasst ferner den beweglich mit dem Basisabschnitt 1 gekoppelten Unterstützungsabschnitt 3 zur Unterstützung einer Gliedmaße, insbesondere eines Arms 4, des menschlichen Körpers des Anwenders. Der Unterstützungsabschnitt 3 ist insbesondere ausgebildet, an der Gliedmaße, insbesondere dem Arm 4, des Anwenders befestigt zu werden. Der Unterstützungsabschnitt 3 umfasst exemplarisch ein insbesondere steifes Armteil 11 und eine am Armteil 11 angeordnete Armbefestigung 12, die exemplarisch als Armschale ausgeführt ist. Das Armteil 11 ist exemplarisch länglich ausgeführt und ist im getragenen Zustand mit seiner Längsachse in Richtung der Längsachse des Arms des Anwenders ausgerichtet. Exemplarisch erstreckt sich das Armteil 11 von der Schulter des Anwenders bis zum Ellbogenbereich des Anwenders. Das Exoskelett 20, insbesondere das Armteil 11, endet exemplarisch am Ellbogenbereich des Anwenders. Die Armbefestigung 12 dient insbesondere zur Befestigung des Unterstützungsabschnitts 3 an dem Arm 4, insbesondere dem Oberarm, des Anwenders. Insbesondere umgreift die Armschale den Oberarm des Anwenders, insbesondere zumindest teilweise, so dass der Oberarm mit einem Band in der Armschale gehalten werden kann. Der Unterarm des Anwenders wird zweckmäßigerweise nicht am Exoskelett 20 befestigt.

Der Unterstützungsabschnitt 3 ist exemplarisch um eine horizontale Schwenkachse relativ zum Basisabschnitt 1, insbesondere relativ zum Rückenteil 8, verschwenkbar gelagert. Exemplarisch ist der Unterstützungsabschnitt 3 direkt an einem Schulterteil 29 gelagert. Die horizontale Schwenkachse kann auch als Hebeachse 36 bezeichnet werden. Im getragenen Zustand des Exoskeletts 20 ist die Hebeachse 36 im Bereich der Schulter des Anwenders angeordnet. Das Exoskelett 20 ist insbesondere ausgebildet, mit dem Unterstützungsabschnitt 3 das Schultergelenk des Anwenders zu unterstützen. Im getragenen Zustand des Exoskeletts 20 kann der Anwender durch ein Verschwenken des Unterstützungsabschnitts 3 um die Hebeachse 36 mit seinem von dem Unterstützungsabschnitt 3 unterstützten Arm 4 eine Hebebewegung ausführen. Die Hebeachse 36 kann insbesondere in y-Richtung ausgerichtet sein. Zweckmäßigerweise liegt die Hebeachse 36 stets in einer horizontalen Ebene, beispielsweise einer x-y-Ebene. Unter einer horizontalen Ebene ist insbesondere eine exakt horizontale Ebene und/oder eine Ebene zu verstehen, die maximal um 10 Grad, 7 Grad oder 5 Grad gegenüber einer Horizontalen gekippt ist.

Der Schwenkwinkel 47 des Unterstützungsabschnitts 3 um die Hebeachse 36 relativ zum Basisabschnitt 1 soll auch als Hebewinkel bezeichnet werden. Der Schwenkwinkel 47 hat bei einem nach unten ausgerichteten Unterstützungsabschnitt 3 (bei einem vertikal ausgerichteten Exoskelett 20) einen Referenzwert, insbesondere einen Minimalwert, und steigt bei einem nach oben gerichteten Verschwenken des Unterstützungsabschnitts 3 kontinuierlich bis zu einem Maximalwert an. Der Minimalwert ist insbesondere ein betragsmäßiger Minimalwert, beispielsweise Null.

Exemplarisch ist der Schwenkwinkel 47 als Winkel zwischen einer Unterstützungsabschnitt-Achse 61 und einer Basisabschnitt-Achse 62 definiert. Die Unterstützungsabschnitt-Achse 61 verläuft in Längsrichtung des Unterstützungsabschnitts 3. Exemplarisch verläuft die Unterstützungsabschnitt-Achse 61 von der Hebeachse 36 in Richtung zu der Armbefestigung 12. In einem Zustand, in dem der Anwender das Exoskelett 20 angelegt hat, verläuft die Unterstützungsabschnitt-Achse 61 zweckmäßigerweise parallel zu einer Oberarm-Achse des von dem Unterstützungsabschnitt 3 unterstützten Arms 4. Die Basisabschnitt-Achse 62 stellt zweckmäßigerweise eine vertikale Achse des Basisabschnitts 1 dar und verläuft vertikal nach unten, insbesondere bei einer vertikalen Ausrichtung des Basisabschnitts 1, beispielsweise in einem Zustand, in dem der Anwender das Exoskelett 20 angelegt hat und aufrecht steht. Der Schwenkwinkel 47 liegt exemplarisch in einer z-x-Ebene, beispielsweise dann, wenn der Anwender aufrecht steht und die Arme nach vorne gehoben werden.

Das Exoskelett 20 umfasst exemplarisch eine Schultergelenkanordnung 9, über die der Unterstützungsabschnitt 3 an dem Basisabschnitt 1, insbesondere dem Rückenteil 8, angebracht ist. Die Schultergelenkanordnung 9 umfasst zweckmäßigerweise eine Gelenkkette 201 mit einem oder mehrerer Drehlager zur Definition einer oder mehrerer vertikaler Drehachsen. Mittels der Gelenkkette 201 ist zweckmäßigerweise ein Verschwenken des Unterstützungsabschnitts 3 relativ zum Basisabschnitt 1, insbesondere relativ zum Rückenteil 8, in einer vorzugsweise horizontalen Schwenkebene möglich, beispielsweise um eine insbesondere virtuelle vertikale Drehachse. Insbesondere ermöglicht es die Gelenkkette 201 dem Anwender, seinen von dem Unterstützungsabschnitt 3 unterstützten Arm 4 um eine durch die Schulter des Anwenders verlaufende vertikale Drehachse zu schwenken, wobei der Unterstützungsabschnitt 3 mit dem Arm 4 mitbewegt wird. Exemplarisch ist die Gelenkkette 201 passiv ausgeführt, so dass das Exoskelett 20 bei dem Verschwenken des Arms in der vorzugsweise horizontalen Schwenkebene keine aktive Unterstützungskraft in Richtung der horizontalen Schwenkbewegung bereitstellt.

Die Schultergelenkanordnung 9 ist zweckmäßigerweise derart angeordnet und/oder ausgebildet, dass sie einen freien Raum definiert, der sich im getragenen Zustand des Exoskeletts 20 oberhalb der Schulter des das Exoskelett 20 tragenden Anwenders befindet, so dass der Anwender durch den freien Raum an der Schultergelenkanordnung 9 vorbei seinen von dem Unterstützungsabschnitt 3 unterstützen Arm senkrecht nach oben ausrichten kann.

Die Schultergelenkanordnung 9 umfasst exemplarisch einen inneren Schultergelenkabschnitt 27, der mittels eines ersten Drehlagers der Schultergelenkanordnung 9 um eine erste vertikale Drehachse verschwenkbar relativ zum Basisabschnitt 1, insbesondere zum Rückenteil 8, gelagert ist. Die Schultergelenkanordnung 9 umfasst exemplarisch ferner einen äußeren Schultergelenkabschnitt 28, der mittels eines zweiten Drehlagers der Schultergelenkanordnung 9 um eine zweite vertikale Drehachse verschwenkbar relativ zum inneren Schultergelenkabschnitt 27 gelagert ist. Die Schultergelenkanordnung 9 umfasst exemplarisch ferner ein Schulterteil 29, dass mittels eines dritten Drehlagers der Schultergelenkanordnung 9 um eine dritte vertikale Drehachse verschwenkbar relativ zum äußeren Schultergelenkabschnitt 28 gelagert ist. Vorzugsweise sind der innere Schultergelenkabschnitt 27, der äußere Schultergelenkabschnitt 28 und das Schulterteil 29 in der Schultergelenkanordnung 9 derart als die Gelenkkette 201 miteinander kinematisch gekoppelt, dass durch den Schwenkwinkel des inneren Schultergelenkabschnitts 27 relativ zum Basisabschnitt 1 der Schwenkwinkel des äußeren Schultergelenkabschnitt 28 relativ zum inneren Schultergelenkabschnitt 27 und/oder der Schwenkwinkel des Schulterteils 29 relativ zum äußeren Schultergelenkabschnitt 28 festgelegt wird.

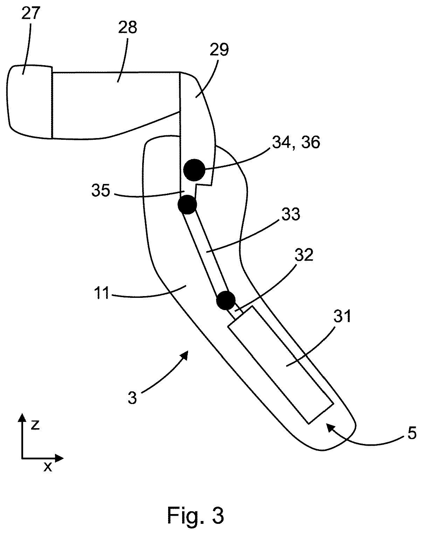

Die Figur 3 zeigt eine schematische Detailansicht des Unterstützungsabschnitts 3, wobei innerhalb des Armteils angeordnete Komponenten sichtbar eingezeichnet sind. Das Armteil 11 umfasst zweckmäßigerweise ein Armteil-Gehäuse, das insbesondere steif ausgeführt und beispielsweise aus Kunststoff gefertigt ist.

Das Exoskelett 20 umfasst eine auf den Unterstützungsabschnitt 3 wirkende Aktoreinrichtung 5 zur Bereitstellung einer Unterstützungskraft für die Gliedmaße, exemplarisch für den Arm des Anwenders. Exemplarisch ist die Aktoreinrichtung 5 zumindest teilweise in dem Armteil 11 angeordnet.

Die Aktoreinrichtung 5 ist eine aktive Aktoreinrichtung. Zweckmäßigerweise stellt das Exoskelett 20 mittels der Aktoreinrichtung 5 die Unterstützungskraft mit einer in Richtung der Schwenkbewegung um die Hebeachse 36 nach oben wirkenden Kraftkomponente bereit, die den Arm 4 des Anwenders in Richtung der Schwenkbewegung nach oben drückt.

Vorzugsweise umfasst die Aktoreinrichtung 5 eine Aktoreinheit mit einem Aktorglied 32. Die Aktoreinheit kann das Aktorglied 32 mit einer Aktorkraft beaufschlagen, um die Unterstützungskraft bereitzustellen. Das Aktorglied 32 ist mit einem exzentrisch zur Hebeachse 36 angeordneten Exzenterabschnitt 35 gekoppelt. Der Exzenterabschnitt 35 ist beispielsweise Teil des Schulterteils 29. Über die Kopplung des Aktorglieds 32 mit dem Exzenterabschnitt 35 wird durch die Aktorkraft ein Drehmoment des Unterstützungsabschnitts 3 um die Hebeachse 36 relativ zum Basisabschnitt 1 und/oder dem Schulterteil 29 bereitgestellt. Durch dieses Drehmoment drückt der Unterstützungsabschnitt 3 gegen die Gliedmaße, insbesondere den Arm 4, des Anwenders, insbesondere nach oben, und stellt so die auf die Gliedmaße, insbesondere den Arm 4, des Anwenders wirkende Unterstützungskraft bereit.

Exemplarisch verfügt die Aktoreinrichtung 5 über ein insbesondere als Schubstange ausgeführtes Koppelelement 33, über das das Aktorglied 32 mit dem Exzenterabschnitt 35 gekoppelt ist.

Bevorzugt ist die Aktoreinrichtung 5 eine pneumatische Aktoreinrichtung und die Aktoreinheit ist zweckmäßigerweise als pneumatischer Antriebszylinder 31 ausgeführt. Das Aktorglied 32 ist die Kolbenstange des Antriebszylinders 31.

Alternativ kann die Aktoreinrichtung auch nicht als pneumatische Aktoreinrichtung ausgeführt sein. Beispielsweise kann die Aktoreinrichtung als hydraulische und/oder elektrische Aktoreinrichtung ausgeführt sein und zweckmäßigerweise als die Aktoreinheit eine hydraulische Antriebseinheit und/oder eine elektrische Antriebseinheit umfassen.

Der Antriebszylinder 31, das Aktorglied 32 und/oder das Koppelelement 33 sind bevorzugt in dem Armteil-Gehäuse angeordnet.

Das Exoskelett 20 umfasst zweckmäßigerweise ein Hebe-Drehlager 34, das die Hebeachse 36 bereitstellt. Exemplarisch ist der Unterstützungsabschnitt 3 über das Hebe-Drehlager 34 an der Schultergelenkanordnung 9 angebracht.

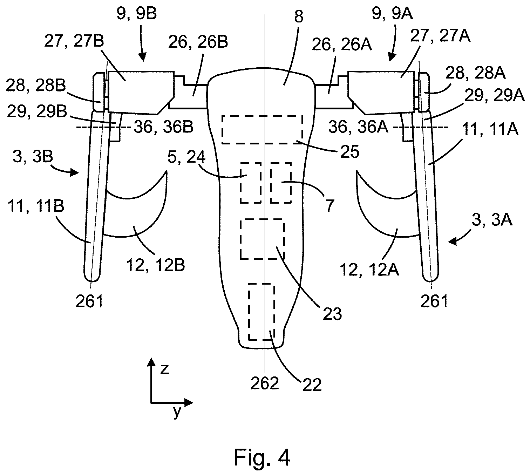

Die Figur 4 zeigt eine Rückansicht des Exoskeletts 20, wobei das textile Tragesystem und das Kraftübertragungselement 18 nicht gezeigt sind.

Das Exoskelett 20 umfasst exemplarisch einen oder mehrere Akkus 22, einen Kompressor 23, eine Ventileinheit 24 und/oder einen Drucklufttank 25, die zweckmäßigerweise Teil des Basisabschnitts 1 sind und insbesondere im Rückenteil-Gehäuse angeordnet sind.

Exemplarisch ist der Akku 22 unten am Rückenteil 8 angeordnet und insbesondere in eine Akku-Aufnahme des Rückenteils 8 von unten eingeschoben. Zweckmäßigerweise ist der Drucklufttank 25 in einem oberen Bereich im Rückenteil 8 angeordnet, exemplarisch (insbesondere in Längsrichtung des Rückenteils 8 und/oder Vertikalrichtung) über der Ventileinheit 24, der Steuereinrichtung 7, dem Kompressor 23 und/oder dem Akku 22. Die Ventileinheit 24 und/oder die Steuereinrichtung 7 ist (insbesondere in Längsrichtung des Rückenteils 8 und/oder Vertikalrichtung) zweckmäßigerweise über dem Kompressor und/oder über dem Akku 22 angeordnet. Der Kompressor 23 ist (insbesondere in Längsrichtung des Rückenteils 8 und/oder Vertikalrichtung) über dem Akku 22 angeordnet.

Der Akku 22 dient als elektrische Energieversorgung für das Exoskelett 20, insbesondere für den Kompressor 23, die Ventileinheit 24, eine Sensoreinrichtung 6 und/oder eine Steuereinrichtung 7.

Der Kompressor 23 ist ausgebildet, Luft zu komprimieren, um Druckluft zu erzeugen. Der Drucklufttank 25 ist ausgebildet, Druckluft - insbesondere die von dem Kompressor 23 erzeugte Druckluft - zu speichern.

Die Ventileinheit 24 umfasst zweckmäßigerweise ein oder mehrere elektrisch betätigbare Ventile und ist insbesondere ausgebildet, eine pneumatische Verbindung von dem Drucklufttank 25 zu einer Druckkammer des pneumatischen Antriebzylinders 31 zu beeinflussen, insbesondere wahlweise herzustellen und/oder zu sperren. Zweckmäßigerweise ist die Ventileinheit 24 ferner ausgebildet, eine pneumatische Verbindung von dem Drucklufttank 25 zur Umgebung des Exoskelett 20 und/oder eine pneumatische Verbindung von der Druckkammer des Antriebszylinders 31 zur Umgebung des Exoskelett 20 zu beeinflussen, insbesondere wahlweise herzustellen und/oder zu sperren. Die Ventileinheit 24 ist zweckmäßigerweise Teil der Aktoreinrichtung 5.

Das Exoskelett 20 umfasst ferner eine Sensoreinrichtung 6. Exemplarisch umfasst die Sensoreinrichtung 6 einen Winkelsensor 37 zur Erfassung des Winkels des Unterstützungsabschnitts 3 relativ zum Basisabschnitt 1, insbesondere des Armteils 11 relativ zum Schulterteil 29. Dieser Winkel soll auch als Schwenkwinkel 47 oder als Hebewinkel bezeichnet werden. Der Winkelsensor 37 dient insbesondere zur Erfassung des Winkels des Unterstützungsabschnitts 3 um die Hebeachse 36. Der Winkelsensor 37 ist beispielsweise als Inkrementalgeber ausgeführt und insbesondere am Hebe-Drehlager 34, insbesondere im Armteil 11 und/oder im Schulterteil 29 angeordnet.

Bevorzugt umfasst die Sensoreinrichtung 6 ferner wenigstens einen Drucksensor zur Erfassung des in der Druckkammer des Antriebszylinders 31 und/oder des in dem Drucklufttank 25 herrschenden Drucks. Der wenigstens eine Drucksensor ist zweckmäßigerweise im Rückenteil 8 und/oder im Armteil 11 angeordnet.

Die Exoskelett-Vorrichtung 10, insbesondere das Exoskelett 20, umfasst zweckmäßigerweise eine Steuereinrichtung 7, die beispielsweise einen Microcontroller umfasst oder als Microcontroller ausgeführt ist. Die Steuereinrichtung 7 dient insbesondere dazu, die Aktoreinrichtung 5, insbesondere die Ventileinheit 24, anzusteuern, um die Bereitstellung der Unterstützungskraft zu steuern. Ferner dient die Steuereinrichtung 7 zum Auslesen der Sensoreinrichtung 6, insbesondere zum Auslesen von von der Sensoreinrichtung 6 erfassten Daten und/oder zur Kommunikation mit dem Werkzeug 30 und/oder dem Mobilgerät 40. Vorzugsweise ist die Steuereinrichtung 7 ausgebildet, durch Ansteuerung der Ventileinheit 24 den in der Druckkammer des Antriebszylinders 31 herrschenden Druck einzustellen, insbesondere zu regeln, beispielsweise unter Berücksichtigung eines mittels des Drucksensors erfassten Druckwerts. Insbesondere ist die Steuereinrichtung 7 ausgebildet, zur Erhöhung der Unterstützungskraft den in der Druckkammer herrschenden Druck durch Ansteuerung der Ventileinheit 24 zu erhöhen und/oder zur Reduzierung der Unterstützungskraft den in der Druckkammer herrschenden Druck durch Ansteuerung der Ventileinheit 24 zu reduzieren.

Gemäß einer bevorzugten Ausgestaltung ist die Steuereinrichtung 7 ausgebildet, die Unterstützungskraft auf Basis des insbesondere mittels des Winkelsensors 37 erfassten Schwenkwinkels 47 des Unterstützungsabschnitts 3 einzustellen. Zweckmäßigerweise kann der Anwender durch seine Muskelkraft den Schwenkwinkel 47 des Unterstützungsabschnitts 3 durch ein Verschwenken seines Arms 4 verändern, und dadurch insbesondere die Bereitstellung der Unterstützungskraft beeinflussen. Insbesondere ist die Unterstützungskraft niedrig genug, sodass der Anwender durch seine Muskelkraft den Schwenkwinkel 47 des Unterstützungsabschnitts 3 durch ein Verschwenken seines Arms 4 verändern kann. Die Unterstützungskraft wird beispielsweise durch die Auslegung des pneumatischen Systems, insbesondere des Kompressors, und/oder durch die Steuereinrichtung 7 begrenzt.

Die Steuereinrichtung 7 ist vorzugsweise Teil des Exoskeletts 20 und exemplarisch in dem Basisabschnitt 1, insbesondere in dem Rückenteil 8 angeordnet. Optional kann die Steuereinrichtung 7 zumindest teilweise in dem Mobilgerät 40 implementiert sein.

Das Exoskelett 20 umfasst exemplarisch ein Bedienelement 14, das zweckmäßigerweise über ein Bedienelement-Kabel 15 am Basisabschnitt 1 befestigt ist. Über das Bedienelement 14 kann der Anwender das Exoskelett 20 steuern und insbesondere die Unterstützungskraft aktivieren, deaktivieren und/oder auf einen aus mehreren möglichen Kraftwerten größer null einstellen.

Das Exoskelett 20 verfügt exemplarisch ferner über ein Verbindungselement 26, über das die Schultergelenkanordnung 9 an dem Basisabschnitt 1, insbesondere dem Rückenteil 8, befestigt ist. Das Verbindungselement 26 ist exemplarisch als Auszugelement ausgeführt. Das Verbindungselement 26 ist zweckmäßigerweise relativ zum Basisabschnitt 1, insbesondere relativ zum Rückenteil 8, in seiner Position verstellbar, um die Position der Schultergelenkanordnung 9 und des Unterstützungsabschnitts 3 an die Schulterbreite des Anwenders anpassen zu können. Insbesondere ist die Position des Verbindungselements 26 durch Einschieben oder Ausziehen des Verbindungselements 26 in oder aus dem Rückenteil 8 verstellbar.

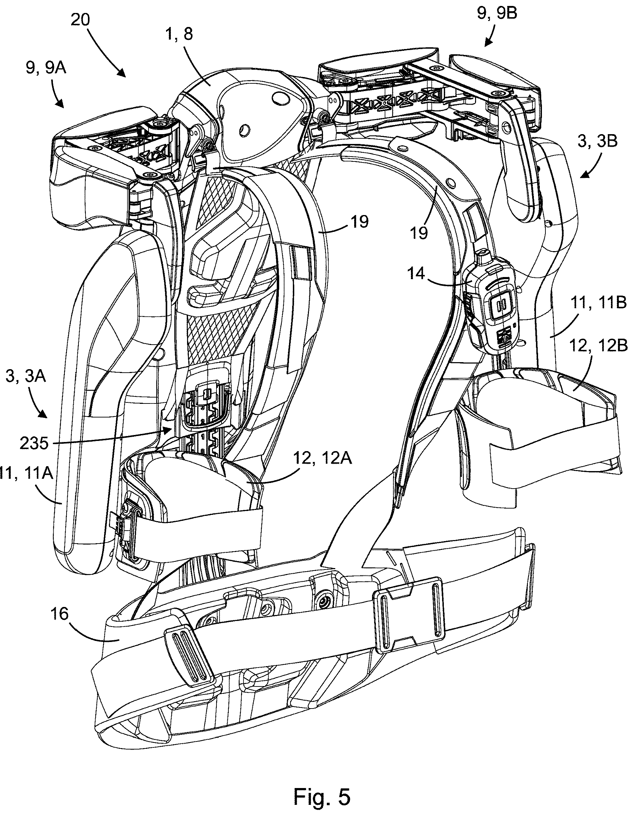

Exemplarisch verfügt das Exoskelett 20 über einen ersten Unterstützungsabschnitt 3A, eine erste Schultergelenkanordnung 9A und ein erstes Verbindungselement 26A, sowie über einen zweiten Unterstützungsabschnitt 3B, eine zweite Schultergelenkanordnung 9B und über ein zweites Verbindungselement 26B. Die Komponenten, deren Bezugszeichen mit dem Zusatz "A" oder "B" versehen sind, sind zweckmäßigerweise jeweils in Entsprechung zu den mit der gleichen Bezugszeichen-Zahl aber ohne den Zusatz "A" oder "B" versehenen Komponenten ausgeführt, beispielsweise gleich oder spiegelsymmetrisch, so dass die diesbezüglichen Erläuterungen in Entsprechung gelten. Die "A"- und "B"-Komponenten des Exoskeletts 20 sind insbesondere in den Figuren 4, 5 und 17 gezeigt.

Der erste Unterstützungsabschnitt 3A, die erste Schultergelenkanordnung 9A und das erste Verbindungselement 26A sind auf einer ersten, exemplarisch der rechten, Seite (in Breitenrichtung) des Basisabschnitts 1 angeordnet, und dienen zur Unterstützung eines ersten, insbesondere des rechten, Arms des Anwenders.

Der zweite Unterstützungsabschnitt 3B, die zweite Schultergelenkanordnung 9B und das zweite Verbindungselement 26B sind auf einer zweiten, exemplarisch der linken, Seite (in Breitenrichtung) des Basisabschnitts 1 angeordnet, und dienen zur Unterstützung eines zweiten, insbesondere des linken, Arms des Anwenders.

Der erste Unterstützungsabschnitt 3A umfasst ein erstes Armteil 11A, eine erste Armbefestigung 12A und/oder eine erste Aktoreinheit, insbesondere einen ersten Antriebszylinder.

Der zweite Unterstützungsabschnitt 3A umfasst ein zweites Armteil 11B, eine zweite Armbefestigung 12B und/oder eine zweite Aktoreinheit, insbesondere einen zweiten Antriebszylinder.

Bevorzugt ist die Steuereinrichtung 7 ausgebildet, für den ersten Unterstützungsabschnitt 3A eine mittels der ersten Aktoreinheit bewirkte erste Unterstützungskraft einzustellen und für den zweiten Unterstützungsabschnitt 3B eine mittels der zweiten Aktoreinheit bewirkte zweite Unterstützungskraft einzustellen, die sich zweckmäßigerweise von der ersten Unterstützungskraft unterscheidet.

Die erste Schultergelenkanordnung 9A umfasst einen ersten inneren Schultergelenkabschnitt 27A, einen ersten äußeren Schultergelenkabschnitt 28A und ein erstes Schulterteil 29A. Die zweite Schultergelenkanordnung 9B umfasst einen zweiten inneren Schultergelenkabschnitt 27B, einen zweiten äußeren Schultergelenkabschnitt 28B und ein zweites Schulterteil 29B.

Der erste Unterstützungsabschnitt 3A ist um eine erste horizontale Hebeachse 36A relativ zum Basisabschnitt 1 verschwenkbar und der zweite Unterstützungsabschnitt 3B ist um eine zweite horizontale Hebeachse 36B relativ zum Basisabschnitt 1 verschwenkbar.

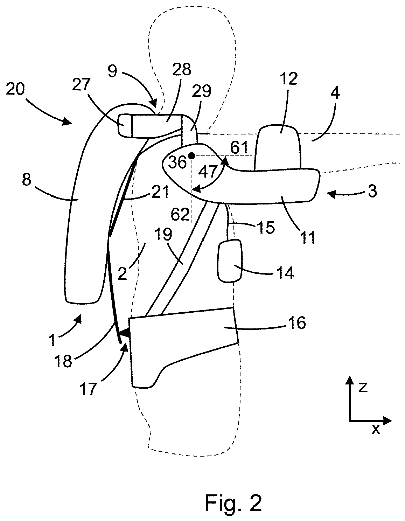

In der Figur 2 ist das Exoskelett 20 in einem Zustand gezeigt, in dem es von einem Anwender getragen, insbesondere bestimmungsgemäß getragen, wird. Mit der Formulierung, dass der Anwender das Exoskelett 20 trägt, insbesondere bestimmungsgemäß trägt, ist gemeint, dass der Anwender das Exoskelett angezogen - also angelegt - hat, und zwar exemplarisch dadurch, dass der Anwender das Rückenteil 8 rucksackartig auf seinem Rücken trägt, den Beckengurt 16 um seine Hüfte angelegt hat, der oder die Schultergurte 19 über die Schulter oder die Schultern des Anwenders verlaufen und/oder ein oder beide Arme des Anwenders mit einer jeweiligen Armbefestigung 12 am jeweiligen Unterstützungsabschnitt 3 befestigt sind.

Exemplarisch ist das Exoskelett 20 ausgebildet, den Anwender bei einer Hebebewegung eines jeweiligen Arms, also bei einem nach oben gerichteten Verschwenken des jeweiligen Unterstützungsabschnitts 3 um eine jeweilige Hebeachse 36 mit einer jeweiligen, insbesondere nach oben wirkenden, Unterstützungskraft zu unterstützen. Ferner ist das Exoskelett 20 zweckmäßigerweise ausgebildet, den Anwender bei einer Senkbewegung, also bei einem nach unten gerichteten Verschwenken des jeweiligen Unterstützungsabschnitts 3 um eine jeweilige Hebeachse 36 mit einer jeweiligen insbesondere nach oben wirkenden Unterstützungskraft zu unterstützen oder entgegenzuwirken oder die jeweilige Unterstützungskraft bei der Senkbewegung zu deaktivieren oder zu reduzieren.

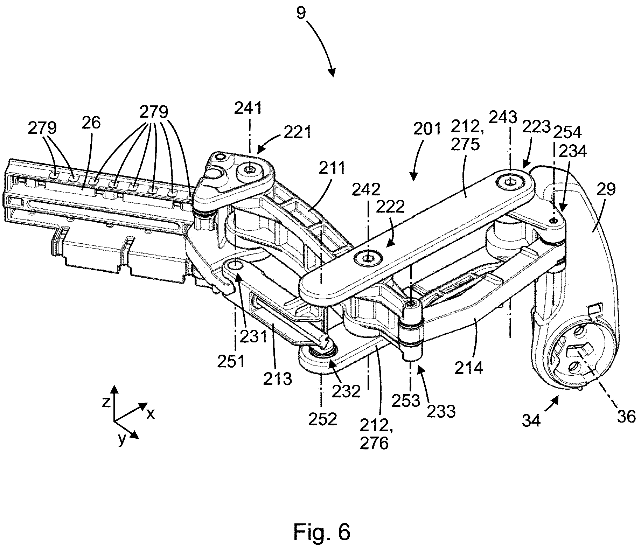

Im Folgenden soll näher auf die Schultergelenkanordnung 9 eingegangen werden. Eine exemplarische Ausgestaltung der Schultergelenkanordnung 9 ist in der Figur 6 gezeigt. Über die Schultergelenkanordnung 9 ist der Unterstützungsabschnitt 3 beweglich an den Basisabschnitt 1 gekoppelt.

Die Schultergelenkanordnung 9 umfasst das Hebe-Drehlager 34, über das der Unterstützungsabschnitt 3 um die horizontale Hebeachse 36 verschwenkbar an der Schultergelenkanordnung 9 gelagert ist. Exemplarisch ist das Armteil 11 über das Hebe-Drehlager 34 um die horizontale Hebeachse 36 verschwenkbar an dem Schulterteil 29 gelagert.

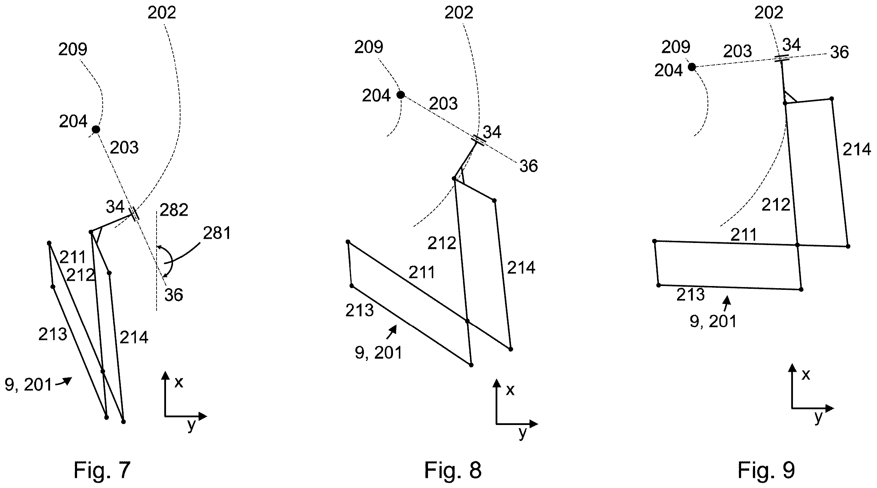

Die Schultergelenkanordnung 9 umfasst die Gelenkkette 201, die für das Hebe-Drehlager 34 eine gekrümmte Bewegungsbahn 202 relativ zum Basisabschnitt 1 definiert. Die gekrümmte Bewegungsbahn 202 liegt vorzugsweise in einer Ebene, insbesondere in einer horizontalen Ebene. Eine exemplarische Bewegungsbahn 202 ist in den Figuren 7, 8 und 9 gezeigt. Insbesondere begrenzt die Gelenkkette 201 im Betrieb des Exoskeletts 20 eine Positionierung des Hebe-Drehlagers 34 relativ zum Basisabschnitt 1 auf die gekrümmte Bewegungsbahn 202.

Bevorzugt ist mittels der Gelenkkette 201 die Positionierung des Hebe-Drehlagers 34 entlang der gekrümmten Bewegungsbahn fest mit einer Rotation des Hebe-Drehlagers 34 um eine durch das Hebe-Drehlager 34 verlaufende gedachte vertikale Drehachse gekoppelt. Beim Bewegen des Hebe-Drehlagers 34 entlang der Bewegungsbahn erfolgt also zwingend eine Rotation des Hebe-Drehlagers 34 um seine eigene vertikale Achse - die mit dem Hebe-Drehlager 34 mitlaufende gedachte vertikale Drehachse, wodurch zweckmäßigerweise eine horizontale Schwenkbewegung des Unterstützungsabschnitts 3 relativ zum Basisabschnitt 1 resultiert. Die Rotation des Hebe-Drehlagers um die gedachte vertikale Drehachse soll auch als Eigenrotation des Hebe-Drehlagers 34 bezeichnet werden.

Bevorzugt ist die Gelenkkette 201 ausgebildet, das Hebe-Drehlager 34 in Abhängigkeit von der Bahnposition des Hebe-Drehlagers 34 auf der Bewegungsbahn 202 um eine durch das Hebe-Drehlager 34 verlaufende gedachte vertikale Drehachse zu schwenken, so dass der Unterstützungsabschnitt 3 unter Durchführung einer entlang der Bewegungsbahn 202 erfolgenden Bewegung des Hebe-Drehlagers 34 horizontal verschwenkbar gegenüber dem Basisabschnitt 1 ist.

Die Gelenkkette 201 ist insbesondere derart ausgeführt, dass die horizontale Verschwenkung des Unterstützungsabschnitts 3 relativ zum Basisabschnitt 1 nicht um eine (relativ zum Basisabschnitt 1) feststehende gedachte vertikale Drehachse erfolgt, sondern stattdessen um eine (in Abhängigkeit von der horizontalen Verschwenkung) in einer horizontalen Ebene wandernde gedachte vertikale Drehachse.

Die horizontale Verschwenkung des Unterstützungsabschnitts 3 relativ zum Basisabschnitt 1 kann mittels eines horizontalen Schwenkwinkels zwischen dem Unterstützungsabschnitt 3 und einer horizontalen Achse des Basisabschnitts 1, beispielsweise einer parallel zur x-Richtung verlaufenden Achse, die auch als Tiefenachse oder Sagitalachse bezeichnet werden kann, beschrieben werden.

Bevorzugt ist die Gelenkkette 201 ausgebildet, das Hebe-Drehlager 34 derart auf der Bewegungsbahn 202 zu führen, dass die Hebeachse 36 entlang der Bewegungsbahn 202, insbesondere entlang der gesamten Bewegungsbahn 202, korrespondierend, insbesondere koaxial, zu einer horizontalen Schultergelenkachse 203 einer Schulter, insbesondere eines Schultergelenks 204, eines das Exoskelett 20 tragenden Anwenders ausgerichtet ist, insbesondere bei einer Hebebewegung des Arms 4 und/oder bei einer horizontalen Schwenkbewegung des Arms 4.

Zweckmäßigerweise ist über die Schultergelenkanordnung 9 keine Kopplung der vertikalen Verschwenkung des Unterstützungsabschnitts 3 - also des Schwenkwinkels 47 - mit der Bahnposition des Hebe-Drehlagers 34 entlang der gekrümmten Bewegungsbahn 202 und/oder mit dem horizontalen Schwenkwinkel des Unterstützungsabschnitts 3 gegeben. Die menschliche Schulter wird bei einem vertikalen Schwenken nach vorne (insbesondere bei einem Schwenkwinkel 47 von 0 bis 90 Grad) um eine parallel zur y-Richtung ausgerichtete Schwenkachse in x-Richtung nach vorne bewegt, was im getragenen Zustand des Exoskeletts 20 dazu führt, dass der Unterstützungsabschnitt 3 und damit das Hebe-Drehlager 34 durch den Arm 4 entlang der gekrümmten Bewegungsbahn 202 nach vorne bewegt wird. Durch die Bewegung entlang der gekrümmten Bewegungsbahn 202 wird wiederum die Eigenrotation des Hebe-Drehlagers 34 - und damit der Hebeachse 36 - bewirkt, so dass die räumliche Ausrichtung der Hebeachse 36 der räumlichen Ausrichtung der horizontalen Schultergelenkachse 203 folgt. Auf diese Weise kann eine optimale Kraftübertragung ermöglicht und unnatürliche Haltungen oder Zwangshaltungen des Anwenders verhindert werden.

Unter Bezugnahme auf die Figuren 7, 8 und 9 soll im Folgenden näher auf die von der Gelenkkette 201 definierte gekrümmte Bewegungsbahn 202 eingegangen werden.

Erfindungsgemäß weist die Bewegungsbahn 202 eine sich entlang der Bewegungsbahn 202 ändernde Krümmung auf, so dass die Bewegungsbahn 202 nicht kreisabschnittsförmig ist. Die Bewegungsbahn 202 hat eine in Breitenrichtung dem Zentrum des Exoskeletts 20 zugewandte konkave Form.

In den Figuren 7, 8, 9 ist exemplarisch ferner eine gekrümmte Schulterachse-Bewegungsbahn 209 gezeigt, auf der sich das Schultergelenk 204 und/oder die horizontale Schultergelenkachse 203 bei einer (vertikalen) Hebebewegung und/oder bei einer horizontalen Schwenkbewegung des Arms 4 bewegt.

Exemplarisch hat die Bewegungsbahn 202 eine kleinere Krümmung als die Schulterachse-Bewegungsbahn 209 und/oder verläuft außen um die Schulterachse-Bewegungsbahn 209. Insbesondere ist der Verlauf der Bewegungsbahn 202 korrespondierend zum Verlauf der Schulterachse-Bewegungsbahn 209 und/oder insbesondere konkav in Bezug auf das Zentrum des Exoskeletts (in Breitenrichtung).

Optional weist das Schulterteil 29 und/oder das Hebe-Drehlager 34 in jeder Stellung der Gelenkkette 201 einen konstanten Abstand zur Schulter des Anwenders auf.

Optional liegt (insbesondere aufgrund des Verlaufs der Bewegungsbahn 202) die Armbefestigung 12 in jeder Stellung des Armteils 11 an der gleichen Stelle des Arms 4 an, wenn der Arm 4 angehoben oder gesenkt und/oder horizontal verschwenkt wird. Auf diese Weise kann eine Relativbewegung zwischen dem Arm 4 und der Armbefestigung 12 reduziert und/oder der Tragekomfort für den Anwender gesteigert werden.

Unter Bezugnahme auf die Figur 6 soll im Folgenden ein exemplarischer Aufbau der Gelenkkette 201 beschrieben werden.

Bevorzugt umfasst die Gelenkkette 201 ein erstes Haupt-Gelenkelement 211, ein erstes Neben-Gelenkelement 213, ein zweites Haupt-Gelenkelement 212, ein zweites Neben-Gelenkelement 214 und das das Hebe-Drehlager 34 umfassende Schulterteil 29.

Die Gelenkelemente 211, 212, 213, 214 sind zweckmäßigerweise jeweils länglich, insbesondere stangenförmig und/oder stabförmig ausgeführt. Zweckmäßigerweise sind die Gelenkelemente 211, 212, 213, 214 mit ihrer Längsachse jeweils in einer horizontalen Ebene ausgerichtet.

Die Gelenkkette 201 umfasst ferner ein erstes Haupt-Drehlager 221, über das das erste Haupt-Gelenkelement 211 relativ zum Basisabschnitt 1 drehbar gelagert ist, und ein erstes Neben-Drehlager 231, über das das erste Neben-Gelenkelement 213 relativ zum Basisabschnitt 1 drehbar gelagert ist.

Die Gelenkkette 201 umfasst ferner ein zweites Haupt-Drehlager 222, über das das zweite Haupt-Gelenkelement 212 drehbar an dem ersten Haupt-Gelenkelement 211 gelagert ist, und ein zweites Neben-Drehlager 232, über das das zweite Haupt-Gelenkelement 212 drehbar an dem ersten Neben-Gelenkelement 213 gelagert ist.

Die Gelenkkette 201 umfasst ferner ein drittes Neben-Drehlager 233, über das das zweite Neben-Gelenkelement 214 drehbar an dem ersten Haupt-Gelenkelement 211 gelagert ist, und ein drittes Haupt-Drehlager 223, über das das Schulterteil 29 drehbar an dem zweiten Haupt-Gelenkelement 212 gelagert ist.

Die Gelenkkette 201 umfasst ferner ein viertes Neben-Drehlager 234, über das das Schulterteil 29 drehbar an dem zweiten Neben-Gelenkelement 214 gelagert ist.

Zweckmäßigerweise kreuzen sich das erste Haupt-Gelenkelement 211 und das zweite Haupt-Gelenkelement 212, und zwar insbesondere bei einer von dem zweiten Haupt-Drehlager 222 bereitgestellten zweiten Haupt-Drehachse 242.

Das zweite Haupt-Drehlager 222 ist in Längsrichtung des zweiten Haupt-Gelenkelements 212 zwischen dem zweiten Neben-Drehlager 232 und dem dritten Haupt-Drehlager 243 angeordnet. Ferner ist das zweite Haupt-Drehlager 222 in Längsrichtung des ersten Haupt-Gelenkelements 211 zwischen dem ersten Haupt-Drehlager 221 und dem dritten Neben-Drehlager 233 angeordnet.

Das erste Haupt-Gelenkelement 211 und das erste Neben-Gelenkelement 213 verlaufen zweckmäßigerweise parallel zueinander. Das zweite Haupt-Gelenkelement 212 und das zweite Neben-Gelenkelement 214 verlaufen zweckmäßigerweise in höchstens einer Stellung der Gelenkkette 201 parallel zueinander. Insbesondere verlaufen das zweite Haupt-Gelenkelement 212 und das zweite Neben-Gelenkelement 214 in mehreren Stellungen der Gelenkkette 201 nicht parallel zueinander und weisen zweckmäßigerweise unterschiedliche Winkel zueinander auf. Alternativ kann vorgesehen sein, dass das zweite Haupt-Gelenkelement 212 und das zweite Neben-Gelenkelement 214 parallel zueinander verlaufen.

Exemplarisch bildet das erste Haupt-Gelenkelement 211 und/oder das erste Neben-Gelenkelement 213 den vorstehend genannten inneren Schultergelenkabschnitt 27. Das zweite Haupt-Gelenkelement 212 und/oder das zweite Neben-Gelenkelement 214 bildet exemplarisch den vorstehend genannten äußeren Schultergelenkabschnitt 28.

Die Gelenkkette 201 ist insbesondere als Kinematik ausgeführt, deren Gelenkelemente 211, 212, 213, 214 zweckmäßigerweise nur in einer (insbesondere nicht veränderlichen) Ebene, insbesondere einer horizontalen Ebene, beweglich sind. Die Kinematik ist so gestaltet, dass eine von der Kinematik gebildete, virtuelle vertikale Schwenkachse der Gelenkkette 201 dem Drehpunkt der Schulter folgt, wenn der Arm 4 angehoben oder gesenkt wird. Optional kann die Gelenkkette 201 als Doppelparallelogramm-Kinematik ausgeführt sein.

Wie in der Figur 6 gezeigt, ist das erste Haupt-Gelenkelement 211 über das erste Haupt-Drehlager 221 an dem Verbindungselement 26 gelagert. Ferner ist das erste Neben-Gelenkelement 213 über das erste Neben-Drehlager 231 an dem Verbindungselement 26 gelagert. Das Verbindungselement 26 verbindet die Gelenkkette 201 mit dem Rückenteil 8.

Das erste Haupt-Gelenkelement 211 ist mit dem Verbindungselement 26 verbunden und in horizontaler Ebene drehbar. Das zweite Haupt-Gelenkelement 212 überkreuzt das erste Haupt-Gelenkelement 211, wobei die Gelenkelemente 211, 212 in horizontaler Ebene drehbar miteinander verbunden sind. Das insbesondere als Koppelstange ausgeführte Neben-Gelenkelement 213 verbindet ein Ende des zweiten Haupt-Gelenkelements 212 mit dem Verbindungselement 26, wobei die Verbindungen drehbar gelagert sind. Ferner verbindet das insbesondere als Koppelstage ausführte zweite Neben-Gelenkelement 214 ein Ende des ersten Haupt-Gelenkelements 211 mit dem Schulterteil 29. Über das Schulterteil 29 ist die Gelenkkette 201 mit dem Unterstützungsabschnitt 3 verbunden.

Exemplarisch ist das Schulterteil 29 länglich ausgeführt und mit seiner Längsachse vertikal ausgerichtet. Der Unterstützungsabschnitt 3 ist zweckmäßigerweise an einem Ende, insbesondere an einem unteren und/oder freien Ende des Schulterteils 29 um eine horizontale Achse - die Hebeachse 36 - drehbar gelagert.

Die Gelenkkette 201, welche die Gelenkelemente 211, 212, 213, 14 umfasst, bildet zweckmäßigerweise ein Doppelparallelogramm. Über die Längenverhältnisse der Gelenkelemente 211, 212, 213, 214 wird zweckmäßigerweise die Form der gekrümmten Bewegungsbahn 202 definiert.

Bevorzugt ist die durch die Gelenkkette 201 bereitgestellte Bewegung entlang der Bewegungsbahn 202 im Betrieb der einzige Freiheitsgrad zur Positionierung des Hebe-Drehlagers 34 relativ zum Basisabschnitt. Die Eigenrotation des Hebe-Drehlagers 34 - also die Rotation der Hebeachse 36 um eine gedachte vertikale Drehachse - ist zweckmäßigerweise an die Bewegung entlang der Bewegungsbahn gekoppelt und stellt daher keinen eigenen Freiheitsgrad dar.

Zweckmäßigerweise sind über die Gelenkkette 201 sämtliche Drehlager 221, 222, 223, 231, 232, 233, 234 der Gelenkkette 201 miteinander gekoppelt, so dass keines dieser Drehlager eine Rotation unabhängig von den anderen Drehlagern der Gelenkkette 201 bereitstellen kann. Der aktuell bereitgestellte Rotationswinkel jedes der Drehlager der Gelenkkette 201 hängt von der Position des Hebe-Drehlagers 34 auf der gekrümmten Bewegungsbahn 202 ab. Insbesondere stellt keines der Drehlager 221, 222, 223, 231, 232, 233, 234 einen unabhängigen Freiheitsgrad bereit.

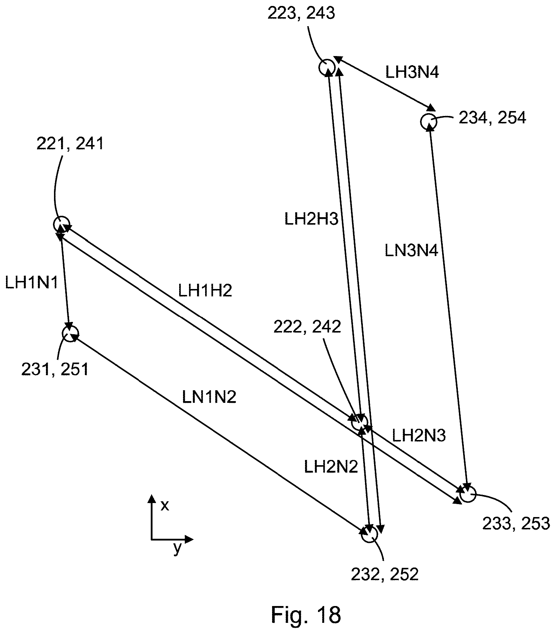

Unter Bezugnahme auf die Figur 18 soll nachstehend näher auf exemplarische Längenverhältnisse der durch die Gelenkelemente 211, 212, 213, 214 definierten Abstände zwischen den Drehachsen der Gelenkkette 201 eingegangen werden.

Bevorzugt beträgt das Verhältnis eines Abstands LH2H3 zwischen der Drehachse 242 des zweiten Haupt-Drehlagers 222 und der Drehachse 243 des dritten Haupt-Drehlagers 223 zu dem Abstand LH1H2 zwischen der Drehachse 242 des zweiten Haupt-Drehlagers 222 und der Drehachse 241 des ersten Haupt-Drehlagers 221 zwischen 0,75 und 1. Zweckmäßigerweise beträgt LH2H3/LH1H2 zwischen 0,75 und 1.

Die Drehachse 241 kann als erste Haupt-Drehachse 241, die Drehachse 242 als zweite Haupt-Drehachse 242 und die Drehachse 243 als dritte Haupt-Drehachse 243 bezeichnet werden. Die Drehachsen 241, 242, 243 sind insbesondere vertikale Drehachsen.

Bevorzugt beträgt das Verhältnis des Abstands LH2N2 zwischen der Drehachse 242 des zweiten Haupt-Drehlagers 222 und der Drehachse 252 des zweiten Neben-Drehlagers 232 zu dem Abstand LH1N1 zwischen der Drehachse 241 des ersten Haupt-Drehlagers 221 und der Drehachse 251 des ersten Neben-Drehlagers 231 gleich 1. Zweckmäßigerweise beträgt LH2N2/LH1N1 gleich 1.

Die Drehachse 251 kann auch als erste Neben-Drehachse 251, die Drehachse 252 als zweite Neben-Drehachse 252, die Drehachse 253 als dritte Neben-Drehachse 253 und die Drehachse 254 als vierte Neben-Drehachse 254 bezeichnet werden. Die Drehachsen 251, 252, 253, 254 sind insbesondere vertikale Drehachsen.

Bevorzugt beträgt das Verhältnis des Abstands LH2N2 zwischen der Drehachse 242 des zweiten Haupt-Drehlagers 222 und der Drehachse 252 zweiten Neben-Drehlagers 232 zu dem Abstand LH3N4 zwischen der Drehachse 243 des dritten Haupt-Drehlagers 223 und der Drehachse 254 des vierten Neben-Drehlagers 234 gleich 1. Zweckmäßigerweise beträgt LH2N2/LH3N4 gleich 1.

Bevorzugt beträgt das Verhältnis des Abstands LH2N2 zwischen der Drehachse 242 des zweiten Haupt-Drehlagers 222 und der Drehachse 252 des zweiten Neben-Drehlagers 232 zu dem Abstand LH2N3 zwischen der Drehachse 242 des zweiten Haupt-Drehlagers 222 und der Drehachse 253 des dritten Neben-Drehlagers 233 zwischen 0,85 und 1. Zweckmäßigerweise beträgt LH2N2/LH2N3 zwischen 0,85 und 1.

Bevorzugt beträgt das Verhältnis des Abstands LH1H2 zwischen der Drehachse 241 des ersten Haupt-Drehlagers 221 und der Drehachse 242 des zweiten Haupt-Drehlagers 222 zu dem Abstand LN1N2 zwischen der Drehachse 251 des ersten Neben-Drehlagers 231 und der Drehachse 252 des zweiten Neben-Drehlagers 232 gleich 1. Zweckmäßigerweise beträgt LH1H2/LN1N2 gleich 1.

Bevorzugt beträgt das Verhältnis des Abstands LH2H3 zwischen der Drehachse 242 des zweiten Haupt-Drehlagers 222 und der Drehachse 243 des dritten Haupt-Drehlagers 223 zu dem Abstand LN3N4 zwischen der Drehachse 253 des dritten Neben-Drehlagers 233 und der Drehachse 254 des vierten Neben-Drehlagers 234 zwischen 0,9 und 1. Zweckmäßigerweise beträgt LH2H3/LN3N4 zwischen 0,9 und 1.

Bei den angegebenen Wertebereichen für die Verhältnisse sind die angegebenen Grenzwerte miteingeschlossen, und können somit auch von den Verhältnissen angenommen werden.

Bevorzugt wird ein erstes Viereck, insbesondere ein erstes Parallelogramm, gebildet, und zwar aus einer ersten gedachten Verbindungsgeraden zwischen der ersten Haupt-Drehachse 241 und der zweiten Haupt-Drehachse 242, einer zweiten gedachten Verbindungsgeraden zwischen der ersten Neben-Drehachse 251 und der zweiten Neben-Drehachse 252, einer dritten gedachten Verbindungsgerade zwischen der ersten Haupt-Drehachse 241 und der ersten Neben-Drehachse 251 und einer vierten gedachten Verbindungsgeraden zwischen der zweiten Haupt-Drehachse 242 und der zweiten Neben-Drehachse 252. Insbesondere ist die erste gedachte Verbindungsgerade gleich lang wie zweite gedachte Verbindungsgerade und/oder parallel zur zweiten gedachten Verbindungsgeraden. Insbesondere ist die dritte gedachte Verbindungsgerade gleich lang wie vierte gedachte Verbindungsgerade und/oder parallel zur vierten gedachten Verbindungsgeraden.

Bevorzugt wird ein zweites Viereck gebildet und zwar aus einer fünften gedachten Verbindungsgerade zwischen der zweiten Haupt-Drehachse 242 und der dritten Haupt-Drehachse 243, einer sechsten gedachten Verbindungsgeraden zwischen der dritten Neben-Drehachse 253 und der vierten Neben-Drehachse 254, einer siebten gedachten Verbindungsgeraden zwischen der zweiten Haupt-Drehachse 242 und der dritten Neben-Drehachse 253 und einer achten gedachten Verbindungsgeraden zwischen der dritten Haupt-Drehachse 243 und der vierten Neben-Drehachse 254.

Bevorzugt ist das zweite Viereck ein unregelmäßiges Viereck, insbesondere ein von einem Parallelogramm verschiedenes Viereck. Bei dem zweiten Viereck ist zweckmäßigerweise die fünfte gedachte Verbindungsgerade nicht gleich lang wie, insbesondere kürzer als, die sechste gedachte Verbindungsgerade und/oder die achte gedachte Verbindungsgerade ist nicht gleich lang, insbesondere kürzer als, die siebte gedachte Verbindungsgerade. Insbesondere ist der Abstand LH3N4 zwischen der Drehachse 243 des dritten Haupt-Drehlagers 223 und der Drehachse 254 des vierten Neben-Drehlagers 234 ungleich oder kleiner als der Abstand LH2N3 zwischen der Drehachse 242 des zweiten Haupt-Drehlagers 222 und der Drehachse 253 des dritten Neben-Drehlagers 233 ist und/oder der Abstand LH2H3 zwischen der Drehachse 242 des zweiten Haupt-Drehlagers 222 und der Drehachse 243 des dritten Haupt-Drehlagers 223 ungleich oder kleiner als der Abstand LN3N4 zwischen der Drehachse 253 des dritten Neben-Drehlagers 233 und der Drehachse 254 des vierten Neben-Drehlagers 234.

Zweckmäßigerweise kann das zweite Viereck in einer Stellung der Gelenkkette 201 eine Form eines Trapez mit nur zwei parallelen Seiten annehmen. Beispielsweise sind in (insbesondere höchstens) einer Stellung der Gelenkkette 201 die fünfte gedachte Gerade und die sechste gedachte Gerade parallel zueinander, und die siebte gedachte Gerade und die achte gedachte Gerade sind in dieser Stellung nicht parallel zueinander.

Vorzugsweise liegen die Drehachsen des zweiten Haupt-Drehlagers 222, des dritten Haupt-Drehlagers 223, des dritten Neben-Drehlagers 233 und des vierten Neben-Drehlagers 234 auf Ecken eines gedachten Vierecks (nämlich des zweiten Vierecks), das kein Parallelogramm ist und vorzugsweise ein unregelmäßiges Viereck ist.

Bevorzugt ist das zweite Viereck kein Parallelogramm.

Optional kann das zweite Viereck als Parallelogramm ausgeführt sein.

Optional bilden die genannten Verbindungsgeraden zwischen den Drehachsen 241, 242, 243, 251, 252, 253, 254 ein Doppelparallelogramm.

Die Längen der genannten Verbindungsgeraden entsprechen den vorstehend genannten Abständen zwischen den Drehachsen.

Die Längenverhältnisse im zweiten Parallelogramm und die Längenverhältnisse zwischen erstem und zweitem Parallelogramm definieren den Verlauf der gekrümmten Bewegungsbahn 202.

Insbesondere ist mittels der vorstehend erläuterten Längenverhältnisse der Verbindungsgeraden - also der Abstände zwischen den Drehachsen - die sich entlang der Bewegungsbahn ändernde Krümmung der gekrümmten Bewegungsbahn 202 definiert, aufgrund derer bei einer Hebebewegung des am Unterstützungsabschnitt 3 befestigten Oberarms des Anwenders die Hebeachse 36 der horizontalen Schultergelenkachse 203 des Anwenders folgt. Auf diese Weise kann sich die Schulterkinematik des Exoskeletts 20 der natürlichen Bewegung der Schulter und des Armes anpassen. Dies kann zu einer günstigen Übertragung der Unterstützungskraft führen, wobei Fehlbelastungen des Armes und der Schulter vermieden werden können sowie ein großer Bewegungsumfang und ein hoher Tragekomfort für den Anwender erzielt werden können.

Bevorzugt definiert das Exoskelett 20 einen freien Raum 205, der sich im getragenen Zustand des Exoskeletts 20 oberhalb der Schulter des das Exoskelett 20 tragenden Anwenders befindet und um den sich die Gelenkkette 201 herum erstreckt, so dass der Anwender durch den freien Raum 205 an der Gelenkkette 201 vorbei seinen von dem Unterstützungsabschnitt 3 unterstützen Arm 4 nach oben, insbesondere über die Schulterhöhe hinaus, vorzugsweise senkrecht nach oben, ausrichten kann.

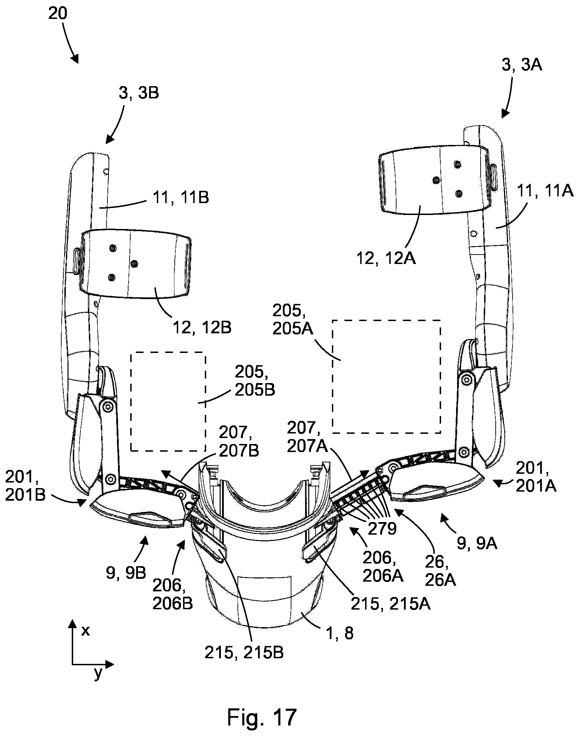

In der Figur 17 ist der freie Raum 205 gezeigt, der exemplarisch einen ersten freien Raum 205A (für den rechten Arm) und einen zweiten freien Raum 205B (für den linken Arm) umfasst.

Insbesondere kann die Gelenkkette 201 eine L-förmige Stellung - beispielsweise eine Ausklapp-Stellung - einnehmen, in der das erste Haupt-Gelenkelement 211 ausgehend von dem Rückenteil 8 und/oder dem Verbindungselement 26 in y-Richtung nach außen verläuft, und zwar insbesondere (in x-Richtung) hinter der Schulter des Anwenders, und in x-Richtung den freien Raum 205 begrenzt. Zweckmäßigerweise verläuft in der L-förmigen Stellung das zweite Haupt-Gelenkelement 212 ausgehend von dem ersten Haupt-Gelenkelement 211 in x-Richtung nach vorne, und zwar insbesondere (in y-Richtung) seitlich außerhalb des von der Schulter eingenommenen Bereichs, und begrenzt in y-Richtung den freien Raum 205.

Die Gelenkkette 201 befindet sich also zweckmäßigerweise vollständig hinter und/oder seitlich der Schulter des Anwenders, und insbesondere nicht über der Schulter, so dass der Anwender bei Überkopftätigkeiten nicht in seiner Bewegungsfreiheit durch die Gelenkkette 201 eingeschränkt wird.

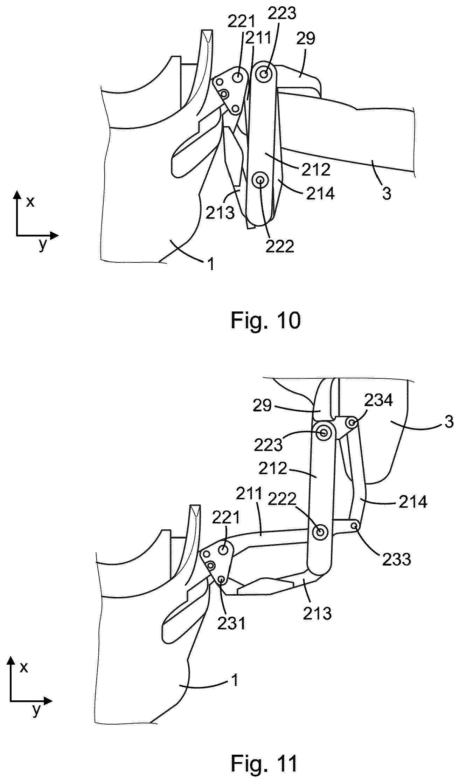

Unter Bezugnahme auf die Figuren 10 und 11 soll nachstehend auf verschiedene Stellungen der Gelenkkette 201 eingegangen werden.

In der Figur 10 ist eine erste Endstellung der Gelenkkette 201 gezeigt, die auch als Einklapp-Stellung bezeichnet werden kann. In der Einklapp-Stellung ist die Gelenkkette 201 maximal eingeklappt. In der Einklapp-Stellung befindet sich das Hebe-Drehlager 34 an einem ersten Ende des gekrümmten Bewegungswegs 202, insbesondere in einer in x-Richtung minimal von dem Hebe-Drehlager 34 einnehmbaren Position - also insbesondere in einer Position maximal nach hinten. In der Einklapp-Stellung ist bevorzugt der horizontale Winkel 281 zwischen der Hebeachse 36 und der (parallel zur x-Richtung verlaufenden) Sagitalachse des Exoskeletts 20 maximal, insbesondere größer als 90 Grad oder größer als 120 Grad oder größer als 150 Grad. In der Einklapp-Stellung hat die Gelenkkette 201 in Draufsicht beispielsweise eine V-Form. Der horizontale Winkel 281 ist in der Figur 7 eingezeichnet; exemplarisch in Bezug auf eine parallel zur Sagitalachse verlaufende gedachte Gerade 282. Der horizontale Winkel 281 ist insbesondere derart definiert, dass er bei einer nach vorne in x-Richtung ausgerichteten Hebeachse 36 gleich null wäre. Der horizontale Winkel 281 wird mit weiter nach außen geschwenktem Unterstützungsabschnitt 3 größer.

Im getragenen Zustand des Exoskeletts 20 nimmt die Gelenkkette 201 insbesondere dann die Einklapp-Stellung ein, wenn der Anwender seine Arme an den Körper anlegt und/oder seitlich oder nach hinten ausstreckt.

In der Figur 11 ist eine zweite Endstellung der Gelenkkette 201 gezeigt, die auch als Ausklapp-Stellung bezeichnet werden kann. In der Ausklapp-Stellung ist die Gelenkkette 201 maximal ausgeklappt. In der Ausklapp-Stellung befindet sich das Hebe-Drehlager 34 an einem zweiten Ende des gekrümmten Bewegungswegs 202, insbesondere in einer in x-Richtung maximal von dem Hebe-Drehlager 34 einnehmbaren Position - also insbesondere in einer Position maximal nach vorne. In der Einklapp-Stellung ist bevorzugt der horizontale Winkel zwischen der Hebeachse 36 und der (parallel zur x-Richtung verlaufenden) Sagitalachse des Exoskeletts 20 minimal, insbesondere kleiner gleich 90 Grad. In der Ausklapp-Stellung hat die Gelenkkette 201 in Draufsicht beispielsweise eine L-Form.

Im getragenen Zustand des Exoskeletts 20 nimmt die Gelenkkette 201 insbesondere dann die Ausklapp-Stellung ein, wenn der Anwender seine Arme nach vorne ausstreckt.

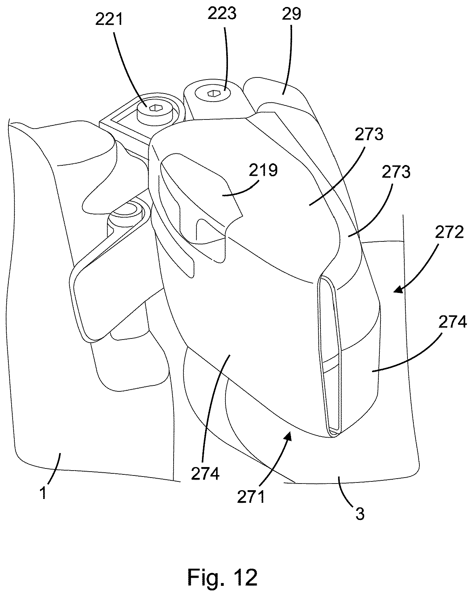

Unter Bezugnahme auf die Figur 12 soll nachstehend auf eine Überlappung von Abdeckkappen 271, 272 in der Einklapp-Stellung eingegangen werden.

Exemplarisch umfasst die Schultergelenkanordnung 9 eine erste Abdeckkappe 271 und/oder eine zweite Abdeckkappe 272. Die erste Abdeckkappe 271 ist insbesondere dem inneren Schultergelenkabschnitt 27, exemplarisch dem ersten Neben-Gelenkelement 213, zugeordnet und/oder daran befestigt. Die zweite Abdeckkappe 272 ist insbesondere dem äußeren Schultergelenkabschnitt 28, exemplarisch dem zweiten Neben-Gelenkelement 214, zugeordnet und/oder daran befestigt. Die erste Abdeckkappe 271 umgibt den inneren Schultergelenkabschnitt 27 zumindest teilweise, insbesondere an mindestens zwei Seiten. Die zweite Abdeckkappe 272 umgibt den äußeren Schultergelenkabschnitt 28 zumindest teilweise, insbesondere an mindestens zwei Seiten.

Jede Abdeckkappe 271, 272 umfasst zweckmäßigerweise einen jeweiligen oberen und/oder unteren horizontalen Abdeckkappenabschnitt 273 zur Abdeckung der Gelenkkette 201 nach oben und/oder unten, und/oder einen jeweiligen vertikalen Abdeckkappenabschnitt 274 zur Abdeckung der Gelenkkette 201 nach außen. Die Abdeckkappen 271, 272 sind zweckmäßigerweise aus Kunststoff gefertigt.

Bevorzugt überlappen sich in der Einklapp-Stellung der obere und/oder untere horizontale Abdeckkappenabschnitt 273 der ersten Abdeckkappe 271 mit dem oberen und/oder unteren horizonalen Abdeckkappenabschnitt 273 der zweiten Abdeckkappe 272. Exemplarisch umgreift in der Einklapp-Stellung eine der Abdeckkappen, exemplarisch die erste Abdeckkappe 271, die andere Abdeckkappe, exemplarisch die Abdeckkappe 272. Insbesondere ist in der Einklapp-Stellung ein oberer Abdeckkappenabschnitt 273 in vertikaler Richtung zwischen einem anderen oberen Abdeckkappenabschnitt 273 und den Gelenkelementen 211, 212 eingeschoben und/oder ein unterer Abdeckkappenabschnitt in vertikaler Richtung zwischen einem anderen unteren Abdeckkappenabschnitt und den Gelenkelementen 211, 212 eingeschoben. In der Ausklapp-Stellung ist zweckmäßigerweise die Überlappung der oberen und/oder unteren horizontalen Abdeckkappenabschnitte 273 nicht oder nur teilweise gegeben.

Bevorzugt befindet sich das erste Haupt-Drehlager 221 in der Einklapp-Stellung direkt neben dem dritten Haupt-Drehlager 223 und liegt insbesondere an diesem an.

Wie in der Figur 6 exemplarisch gezeigt, ist vorzugsweise das erste Haupt-Gelenkelement 211 und/oder das zweite Neben-Gelenkelement 214 vertikal versetzt zum zweiten Haupt-Gelenkelement 212 angeordnet. In der Einklapp-Stellung ist zweckmäßigerweise ein insbesondere horizontaler Schwenkwinkel zwischen dem ersten Haupt-Gelenkelement 211 und dem zweiten Haupt-Gelenkelement 212 minimal. In der Einklapp-Stellung überlappt zweckmäßigerweise das erste Haupt-Gelenkelement 211 und/oder das zweite Neben-Gelenkelement 214 mit mehr als der Hälfte der jeweiligen Längserstreckung horizontal mit dem zweiten Haupt-Gelenkelement 212.

Wie in der Figur 6 zu sehen, umfasst das zweite Haupt-Gelenkelement 212 exemplarisch zwei vertikal versetzt zueinander angeordnete Gelenkelement-Abschnitte 275, 276, und zwar einen oberen Gelenkelement-Abschnitt 275 und einen unteren Gelenkelement-Abschnitt 276. Das erste Haupt-Gelenkelement 211 und/oder das zweite Neben-Gelenkelement 214 ist in z-Richtung zwischen den beiden Gelenkelement-Abschnitten 275, 276 angeordnet, so dass das erste Haupt-Gelenkelement 211 und/oder das zweite Neben-Gelenkelement 214 in der Einklapp-Stellung zumindest teilweise in den Zwischenraum zwischen den beiden Gelenkelement-Abschnitten 275, 276 eintauchen kann.

Bevorzugt erfolgt in der Einklapp-Stellung ein ineinander Eintauchen und/oder ineinander Falten der Gelenkelemente 211, 212, 214 und/oder der Abdeckkappen 271, 272, wie in der Figur 10 zu sehen ist. Hierdurch kann für den Anwender ein hoher Bewegungsumfang und/oder ein kompaktes Exoskelett 20 erzielt werden.

Unter Bezugnahme auf die Figur 17 soll nachstehend näher ein Verstellmechanismus 206 zur Anpassung des Exoskeletts 20 an eine Schulterbreite des Anwenders erläutert werden.

Bevorzugt umfasst das Exoskelett 20 einen Verstellmechanismus 206, über den die Schultergelenkanordnung 9 in einer Verstellrichtung 207 relativ zum Basisabschnitt 1, insbesondere relativ zum Rückenteil 8, positionierbar ist, um das Exoskelett 20 an die Schulterbreite des Anwenders anzupassen.

Der Verstellmechanismus 206 umfasst zweckmäßigerweise das insbesondere länglich, beispielsweise leistenförmig, ausgeführte Verbindungselement 26, das zweckmäßigerweise in der Art eines Auszugs in das Rückenteil 8 eingeschoben und/oder aus dem Rückenteil 8 ausgezogen werden kann, um die Schultergelenkanordnung 9 (zusammen mit dem Unterstützungsabschnitt 3) in der Verstellrichtung 207 relativ zum Rückenteil 8 zu positionieren.

Der Verstellmechanismus 206 umfasst insbesondere ein beispielsweise als Hebel, insbesondere als Klemmhebel, ausgeführtes Betätigungselement 215, über dessen Betätigung der Anwender die Schultergelenkanordnung 9 (zusammen mit dem Unterstützungsabschnitt 3) in einer (in der Verstellrichtung 207) eingestellten Position relativ zum Basisabschnitt 1, insbesondere relativ zum Rückenteil 8, fixieren kann. Zweckmäßigerweise ist durch Betätigung des Betätigungselements 215 das Verbindungselement 26 in seiner eingestellten Position relativ zum Rückenteil 8 fixierbar, insbesondere festklemmbar.

Bevorzugt ist der Verstellmechanismus 206, insbesondere das Verbindungselement 26 und/oder das Betätigungselement 215 in einem oberen und/oder seitlichen Bereich des Rückenteils 8 angeordnet.

Beispielsweise umfasst der Verstellmechanismus 206 einen Verriegelungsabschnitt, der über die Betätigung des Betätigungselements 215 wahlweise in eine Verriegelungsstellung oder eine Freigabestellung versetzbar ist. Insbesondere ist der Verriegelungsabschnitt in der Verriegelungsstellung in Formschluss und/oder Kraftschluss mit dem Verbindungselement 26. Zweckmäßigerweise ist der Verriegelungsabschnitt in der Freigabestellung nicht in Formschluss und/oder nicht in Kraftschluss mit dem Verbindungselement 26.

Vorzugsweise weist der Verstellmechanismus 206 diskrete Breiteneinstellpositionen 279 auf, die beispielsweise als insbesondere an dem Verbindungselement 26 angeordnete Rastpunkte ausgeführt sind. Die Rastpunkte sind beispielsweise punktuelle Vertiefungen. Die Breiteneinstellpositionen 279 dienen zur Einstellung auf die Schulterbreite des Anwenders. Optional weisen die diskreten Breiteneinstellpositionen zumindest teilweise Breitenmarkierungen auf. Der Verstellmechanismus stellt insbesondere eine gestufte - also zweckmäßigerweise keine stufenlose - Anpassung des Exoskeletts an die Schulterbreite des Anwenders bereit.

Die Verstellrichtung 207 ist zweckmäßigerweise relativ zu einer parallel zur y-Richtung verlaufenden Horizontalachse des Exoskeletts 20 um einen Anstellwinkel nach vorne gerichtet. Der Anstellwinkel ist vorzugsweise größer als 15 Grad oder größer als 20 Grad oder größer als 27 Grad oder kleiner als 45 Grad oder kleiner als 37 Grad oder kleiner als 32 Grad. Exemplarisch ist der Anstellwinkel 30 Grad.

Durch ein Verstellen der Schultergelenkanordnung 9 entlang der Verstellrichtung 207 wird zweckmäßigerweise das Hebe-Drehlager 34 in y-Richtung weiter nach außen und/oder in x-Richtung weiter nach vorne verstellt.

Exemplarisch ist die Schultergelenkanordnung 9 die erste Schultergelenkanordnung 9A, der Verstellmechanismus 206 ist ein erster Verstellmechanismus 206A und die Verstellrichtung 207 ist eine erste Verstellrichtung 207A. Das Exoskelett 20 umfasst ferner die zweite Schultergelenkanordnung 9B und einen zweiten Verstellmechanismus 206B, über den die zweite Schultergelenkanordnung 9B in einer zweiten Verstellrichtung 207B relativ zum Basisabschnitt 1 positionierbar ist. Die erste Verstellrichtung 207A und die zweite Verstellrichtung 207B schneiden sich unter einem stumpfen (insbesondere in x-Richtung nach vorne geöffneten) Winkel, insbesondere unter einem Winkel kleiner als 150 Grad oder kleiner als 135 Grad oder kleiner als 125 Grad und/oder unter einem Winkel größer als 90 Grad oder größer als 105 Grad oder größer als 115 Grad. Beispielsweise schneiden sich die erste Verstellrichtung 207A und die zweite Verstellrichtung 207B unter einem Winkel von 120 Grad.

Bevorzugt ist der zweite Verstellmechanismus 206B in Entsprechung zu dem ersten Verstellmechanismus 206A ausgeführt, so dass die Erläuterungen zu dem ersten Verstellmechanismus 206A in Entsprechung für den zweiten Verstellmechanismus 206B gelten. Der zweite Verstellmechanismus 206B ist beispielsweise spiegelsymmetrisch zu dem ersten Verstellmechanismus 206A ausgeführt, insbesondere in Bezug auf eine parallel zur x-Richtung verlaufende Achse. Zweckmäßigerweise umfasst jeder Verstellmechanismus 206A, 206B ein eigenes Betätigungselement 215A, 215B.

In einer x-y-Ansicht bilden die Verstellrichtungen 207A, 207B zweckmäßigerweise eine V-Form. In der Figur 17 sind aus Illustrationszwecken die beiden Verstellmechanismen 206A, 206B unterschiedlich eingestellt. Beide Verstellmechanismen 206A, 206B können unterschiedlich oder gleich eingestellt sein, so dass zweckmäßigerweise die Verbindungselemente der beiden Schultergelenkanordnungen 9A, 9B unterschiedlich weit oder gleich weit aus dem Rückenteil 8 ausgezogen sein können.

Zweckmäßigerweise sind die Breitenmarkierungen des zweiten Verstellmechanismus 206B korrespondierend zu den Breitenmarkierungen des ersten Verstellmechanismus 206A. Insbesondere haben gleiche Breitenmarkierungen des ersten Verstellmechanismus 206A und des zweiten Verstellmechanismus 206B den gleichen Abstand zur Sagitalebene des Exoskeletts. Auf diese Weise kann die Schultergelenkanordnung 9 in einfacher Weise auf die Schulterbreite des Anwenders eingestellt werden.

Wie exemplarisch in der Figur 4 gezeigt, ist vorzugsweise der Unterstützungsabschnitt 3 in einer mit seiner Unterstützungsabschnitt-Längsachse 261 maximal nach unten gerichteten Stellung, insbesondere bei einem betragsmäßig minimalen Schwenkwinkel 47, mit seiner Unterstützungsabschnitt-Längsachse 261 gegenüber einer Vertikalachse 262 des Exoskeletts 20 um einen Winkel, insbesondere einen Abduktionswinkel, größer null in Breitenrichtung y des Exoskeletts 20 seitlich nach außen ausgerichtet, so dass ein Abstand in Breitenrichtung y zwischen der Unterstützungsabschnitt-Längsachse 261 und der Vertikalachse 262 in Richtung vertikal nach unten zunimmt. Die Unterstützungsabschnitt-Längsachse 261 ist vorzugsweise gleich der Unterstützungsabschnitt-Achse 61 und/oder die Vertikalachse 262 ist zweckmäßigerweise gleich der Basisabschnitt-Achse 62.

Der Winkel, insbesondere der Abduktionswinkel, beträgt zweckmäßigerweise zwischen 5 und 10 Grad, exemplarisch 5 Grad. Der Winkel entspricht zweckmäßigerweise dem menschlichen Abduktionswinkel. Als menschlicher Abduktionswinkel soll insbesondere der Winkel bezeichnet werden, in dem der Oberarm gegenüber der senkrechten Körperachse absteht, wenn der Arm locker herabhängt.

Zweckmäßigerweise sind der erste Unterstützungsabschnitt 3A und der zweite Unterstützungsabschnitt 3B wie vorstehend erläutert mit ihrer jeweiligen Unterstützungsabschnitt-Achse 261 jeweils nach außen gerichtet. Die Längsachsen 261 der beiden Unterstützungsabschnitte 3A, 3B weisen in der y-z-Ebene zweckmäßigerweise den doppelten Abduktionswinkel, beispielsweise 10 Grad, zueinander auf.

Bevorzugt weist die Gelenkkette 201 keinen Freiheitsgrad auf, der eine reine Abduktion des Armes 4 ermöglicht. Bevorzugt kann eine Abduktion des Arms während der Anwendung des Exoskeletts 20 durch eine kombinierte Flexions- und Rotationsbewegung des Armes 4 erfolgen.

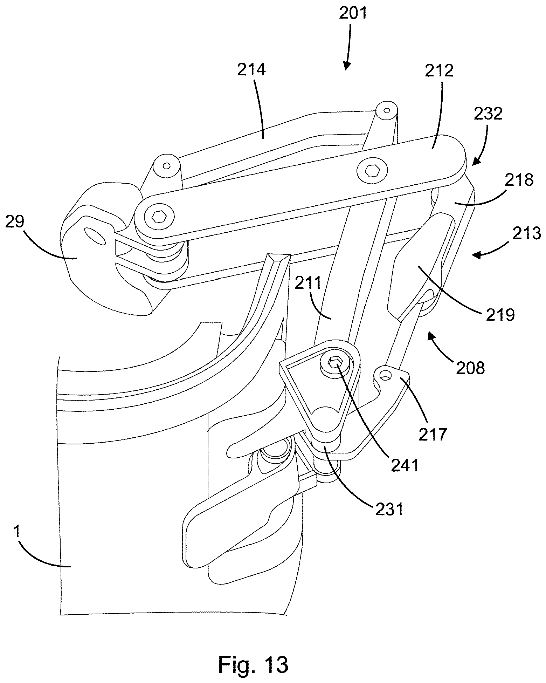

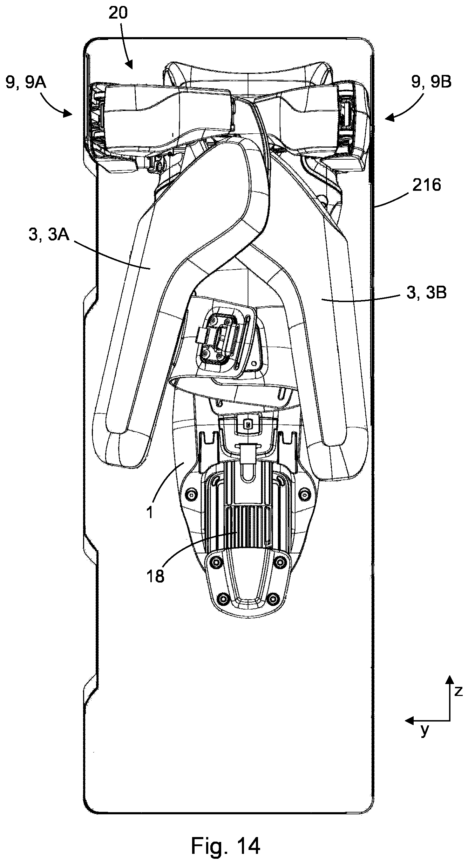

Unter Bezugnahme auf die Figuren 13 und 14 soll nachstehend näher auf eine vom Exoskelett 20 einnehmbare Verstaukonfiguration eingegangen werden.

Bevorzugt ist das Exoskelett 20 durch Umklappen der Schultergelenkanordnung 9 relativ zum Basisabschnitt 1 und/oder durch Verfahren des an dem Basisabschnitt 1 angeordneten, insbesondere zu dem Beckengurt 16 führenden Kraftübertragungselements 18, wahlweise in eine Verstaukonfiguration oder eine Betriebskonfiguration versetzbar. Das Exoskelett 20 ist in der Verstaukonfiguration kompakter, und weist insbesondere eine geringere Breite und/oder Höhe auf, als in der Betriebskonfiguration. Zweckmäßigerweise ist das Exoskelett 20 in der Verstaukonfiguration nicht bestimmungsgemäß von einem Anwender als Exoskelett 20 tragbar.

Vorzugsweise sind die Unterstützungsabschnitte 3 in der Verstaukonfiguration vorne über das Rückenteil 8 geklappt. Ferner ist in der Verstaukonfiguration vorzugsweise das Kraftübertragungselement 18 maximal in das Rückenteil 8 eingeschoben.

In der Figur 14 ist das Exoskelett 20 in der Verstaukonfiguration gezeigt. Exemplarisch ist das Exoskelett 20 in einem Behälter 216 angeordnet, der beispielsweise als Systemkiste oder als Koffer ausgeführt ist. Bevorzugt passt das Exoskelett 20 in der Verstaukonfiguration in den Behälter 216 und/oder passt in der Betriebskonfiguration nicht in den Behälter 216. Bevorzugt wird eine Anordnung bereitgestellt, umfassend den Behälter 216 und das in dem Behälter 216 untergebrachte Exoskelett 20, wobei das Exoskelett 20 zweckmäßigerweise die Verstaukonfiguration einnimmt.

Aus Gründen der besseren Darstellbarkeit ist in der Figur 13 der Unterstützungsabschnitt 3 nicht gezeigt. Exemplarisch ist in der Verstaukonfiguration die Gelenkkette 201, insbesondere das erste Haupt-Gelenkelement 211 und/oder das zweite Haupt-Gelenkelement 212, relativ zum Rückenteil 8 nach innen geschwenkt (um eine gedachte vertikale Achse und/oder um die erste vertikale Haupt-Drehachse 241), insbesondere weiter nach innen geschwenkt als in der beispielsweise in der Figur 11 gezeigten zweiten Endstellung. Vorzugsweise befindet sich das Hebe-Drehlager 34 in der Verstaukonfiguration im gleichen y-Bereich wie das Rückenteil 8 und/oder befindet sich in der Betriebskonfiguration außerhalb des y-Bereichs des Rückenteils 8.

Wie in der Figur 14 exemplarisch gezeigt, sind in der Verstaukonfiguration zweckmäßigerweise beide Schultergelenkanordnungen 9 nach vorne umgeklappt, so dass beide Unterstützungsabschnitte 3A, 3B vor dem Rückenteil 8 positioniert sind und das Rückenteil in y-Richtung zumindest teilweise überlappen.

Bevorzugt umfasst das Exoskelett 20 einen Verriegelungsmechanismus 208, der das Exoskelett 20 in der Betriebskonfiguration verriegelt, so dass ein Entriegeln des Verriegelungsmechanismus 208 erforderlich ist, um das Exoskelett 20 in die Verstaukonfiguration zu versetzen. Insbesondere verriegelt der Verriegelungsmechanismus 208 die Schultergelenkanordnung 9 des Exoskeletts 20 in der Betriebskonfiguration und verhindert so das Umklappen der Schultergelenkanordnung 9 in die Verstaukonfiguration.

Wie vorstehend erläutert, umfasst die Schultergelenkanordnung 9 das erste Neben-Drehlager 231, das zweite Neben-Drehlager 232, sowie das von dem ersten Neben-Drehlager 231 zu dem zweiten Neben-Drehlager 232 verlaufende erste Neben-Gelenkelement 213. Exemplarisch ist durch Entriegelung des Verriegelungsmechanismus 208 das erste Neben-Gelenkelement 213 verlängerbar und/oder entkoppelbar, um das Umklappen der Schultergelenkanordnung 9 relativ zum Basisabschnitt 1, insbesondere relativ zum Rückenteil 8, zu ermöglichen.

Insbesondere kann durch Entriegeln des Verriegelungsmechanismus 208 das kinematische Verhältnis zwischen dem, beispielsweise von dem ersten Viereck gebildeten, inneren Schultergelenkabschnitt 27 und dem, beispielsweise von dem zweiten Viereck gebildeten, äußeren Schultergelenkabschnitt 28 entkoppelt werden.

Wie in der Figur 13 gezeigt, umfasst das erste Neben-Gelenkelement 213 zweckmäßigerweise einen (insbesondere dem ersten Neben-Drehlager 231 zugeordneten) ersten Gelenkelementabschnitt 217 und einen insbesondere dem zweiten Neben-Drehlager 232 zugeordneten) zweiten Gelenkelementabschnitt 218, die durch Entriegelung des Verriegelungsmechanismus 208 relativ zueinander bewegbar sind, um das erste Neben-Gelenkelement 213 zu verlängern, insbesondere in Längsrichtung des ersten Neben-Gelenkelements 213, und vorzugsweise dadurch das Umklappen der Schultergelenkanordnung 9, insbesondere des äußeren Schultergelenkabschnitts 28, vor das Rückenteil 8 zu ermöglichen.

Exemplarisch ist einer der Gelenkelementabschnitte 217, 218 zumindest teilweise in den anderen der Gelenkelementabschnitte 217, 218 einschiebbar und aus diesem ausziehbar, um das erste Neben-Gelenkelement 213 wahlweise zu verlängern oder zu verkürzen.

Alternativ kann eine Ausgestaltung gegeben sein, bei der die Gelenkelementabschnitte 217, 218 soweit auseinander gezogen werden können, dass diese vollkommen voneinander entkoppelt sind.

Bevorzugt umfasst der Verriegelungsmechanismus 208 ein Betätigungselement 219, über das der Verriegelungsmechanismus 208 vom Anwender wahlweise verriegelt oder entriegelt werden kann. Insbesondere können mittels des Betätigungselements 219 die beiden Gelenkelementabschnitte 217, 218 wahlweise relativ zueinander fixiert werden oder relativ zueinander verschiebbar gemacht werden. Exemplarisch ist das Betätigungselement 219 an der ersten Abdeckkappe 271 angeordnet. Vorzugsweise kann mittels des Betätigungselements 219 ein Rastelement, insbesondere ein Rastbolzen, bewegt werden, über den die Fixierung der beiden Gelenkelementabschnitte 217, 218 relativ zueinander wahlweise hergestellt oder gelöst werden kann.

Bevorzugt umfasst das Exoskelett 20 ferner einen Kraftübertragungselement-Verriegelungsmechanismus 235, der das Kraftübertragungselement 18 in der Betriebskonfiguration verriegelt und so das Verfahren des Kraftübertragungselements 18 in die Verstaukonfiguration verhindert. Insbesondere ist der Kraftübertragungselement-Verriegelungsmechanismus 235 ausgebildet, das Kraftübertragungselement 18 relativ zum Rückenteil 8 wahlweise zu fixieren oder verschiebbar, insbesondere einschiebbar und ausziehbar, zu machen.

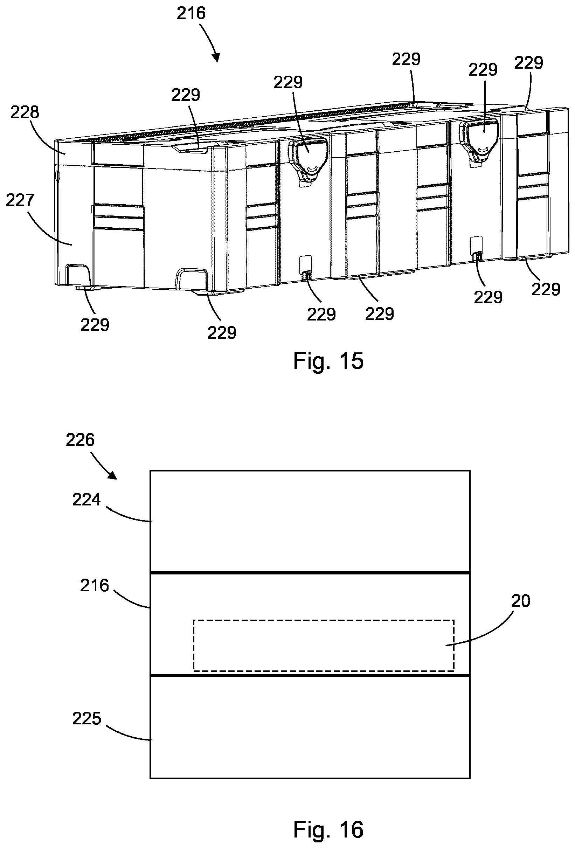

In der Figur 15 ist eine exemplarische Ausgestaltung des als Systemkiste ausgeführten Behälters 216 gezeigt. Der Behälter 216 umfasst ein Unterteil 227, ein auf das Unterteil 227 aufgesetzten Deckel 228 sowie Kopplungselemente 229 zur Kopplung des Behälters 216 an einen auf den Behälter 216 aufgesetzten, zu dem Behälter 216 identischen oberen Behälter 224 und/oder zur Kopplung des Behälters 216 an einen zu dem Behälter 216 identischen unteren Behälter 225, auf den der Behälter 216 aufgesetzt ist.

Die Kopplungselemente 229 umfassen einen oder mehrere Riegel, insbesondere Drehriegel, einen oder mehrere Vorsprünge und/oder einen oder mehrere Vertiefungen.

In der Figur 16 ist ein vertikaler Stapel 226 aus dem unteren Behälter 225, dem auf den unteren Behälter 225 aufgesetzten Behälter 216 und dem auf dem Behälter 216 aufgesetzten oberen Behälter 224 gezeigt. Über die Kopplungselemente 229 sind die Behälter 225, 216, 224 aneinander fixiert, insbesondere in sämtliche Raumrichtungen. Beispielsweise kann durch Anheben des oberen Behälters 224 der gesamte Stapel 226 angehoben werden.

Zweckmäßigerweise kann das Exoskelett 20 auch mit einer anderen Schultergelenkanordnung bereitgestellt sein, beispielsweise einer Schultergelenkanordnung ohne Gelenkkette oder ohne eine Gelenkkette, die für das Hebe-Drehlager eine Bewegungsbahn, insbesondere eine gekrümmte Bewegungsbahn, bereitstellt. Beispielsweise kann die Gelenkkette für die Bewegung des Hebe-Drehlagers mehr als einen Freiheitsgrad definieren, beispielsweise eine Bewegung in einer Bewegungsebene, insbesondere eine Bewegung mit zwei oder mehr Freiheitsgraden.

## Patentansprüche

1. Exoskelett (20), umfassend:
- einen Basisabschnitt (1) zur Anbringung an einen Torso (2) eines menschlichen Körpers,
- einen Unterstützungsabschnitt (3) zur Unterstützung eines Arms (4) des menschlichen Körpers,
- eine auf den Unterstützungsabschnitt (3) wirkende, insbesondere pneumatische, Aktoreinrichtung (5) zur Bereitstellung einer Unterstützungskraft für den Arm (4), und
- eine Schultergelenkanordnung (9), über die der Unterstützungsabschnitt (3) beweglich an den Basisabschnitt (1) gekoppelt ist, wobei
- die Schultergelenkanordnung (9) ein Hebe-Drehlager (34) umfasst, über das der Unterstützungsabschnitt (3) um eine horizontale Hebeachse (36) verschwenkbar an der Schultergelenkanordnung (9) gelagert ist, und
- die Schultergelenkanordnung (9) ferner eine Gelenkkette umfasst, die für das Hebe-Drehlager (34) eine, insbesondere in einer horizontalen Ebene liegende, gekrümmte Bewegungsbahn (202) relativ zum Basisabschnitt (1) definiert, wobei die Bewegungsbahn (202) eine sich entlang der Bewegungsbahn (202) ändernde Krümmung aufweist, so dass die Bewegungsbahn (202) nicht kreisabschnittsförmig ist.

2. Exoskelett (20) nach einem voranstehenden Anspruch, wobei die Gelenkkette (201) ausgebildet ist, das Hebe-Drehlager (34) in Abhängigkeit von einer Bahnposition des Hebe-Drehlagers (34) auf der Bewegungsbahn (202) um eine durch das Hebe-Drehlager (34) verlaufende gedachte vertikale Drehachse zu schwenken, so dass der Unterstützungsabschnitt (3) unter Durchführung einer entlang der Bewegungsbahn (202) erfolgenden Bewegung des Hebe-Drehlagers (34) horizontal verschwenkbar gegenüber dem Basisabschnitt (1) ist, und/oder wobei die Gelenkkette (201) ausgebildet ist, das Hebe-Drehlager (34) derart auf der Bewegungsbahn (202) zu führen, dass die Hebeachse (36) entlang der Bewegungsbahn (202), insbesondere entlang der gesamten Bewegungsbahn (202), korrespondierend, insbesondere koaxial, zu einer horizontalen Schultergelenkachse (203) einer Schulter eines das Exoskelett (20) tragenden Anwenders ausgerichtet ist, und/oder wobei eine Bewegung entlang der Bewegungsbahn (202) im Betrieb des Exoskeletts (20) der einzige Freiheitsgrad zur Positionierung des Hebe-Drehlagers (34) relativ zum Basisabschnitt (1) ist, und/oder wobei das Exoskelett (20) einen freien Raum (205) definiert, der sich im getragenen Zustand des Exoskeletts (20) oberhalb der Schulter des das Exoskelett (20) tragenden Anwenders befindet und um den sich die Gelenkkette (201) herum erstreckt, so dass der Anwender durch den freien Raum an der Gelenkkette (201) vorbei seinen von dem Unterstützungsabschnitt (3) unterstützen Arm nach oben, insbesondere über die Schulterhöhe hinaus, vorzugsweise senkrecht nach oben, ausrichten kann.

3. Exoskelett (20) nach einem voranstehenden Anspruch, wobei die Gelenkkette (201) ein erstes Haupt-Gelenkelement (211), ein erstes Neben-Gelenkelement (213), ein zweites Haupt-Gelenkelement (212), ein zweites Neben-Gelenkelement (214) und ein das Hebe-Drehlager (34) umfassendes Schulterteil (29), sowie ein erstes Haupt-Drehlager (221), über das das erste Haupt-Gelenkelement (211) relativ zum Basisabschnitt (1) drehbar gelagert ist, ein erstes Neben-Drehlager (231), über das das erste Neben-Gelenkelement (213) relativ zum Basisabschnitt (1) drehbar gelagert ist, ein zweites Haupt-Drehlager (222), über das das zweite Haupt-Gelenkelement (212) drehbar an dem ersten Haupt-Gelenkelement (211) gelagert ist, ein zweites Neben-Drehlager (232), über das das zweite Haupt-Gelenkelement (212) drehbar an dem ersten Neben-Gelenkelement (213) gelagert ist, ein drittes Neben-Drehlager (233), über das das zweite Neben-Gelenkelement (214) drehbar an dem ersten Haupt-Gelenkelement (211) gelagert ist, ein drittes Haupt-Drehlager (223), über das das Schulterteil (29) drehbar an dem zweiten Haupt-Gelenkelement (212) gelagert ist, und ein viertes Neben-Drehlager (234), über das das Schulterteil (29) drehbar an dem zweiten Neben-Gelenkelement (214) gelagert ist, aufweist.

4. Exoskelett (20) nach Anspruch 3, wobei die Drehachsen des zweiten Haupt-Drehlagers (222), des dritten Haupt-Drehlagers (223), des dritten Neben-Drehlagers (233) und des vierten Neben-Drehlagers (234) auf Ecken eines gedachten Vierecks liegen, das kein Parallelogramm ist und vorzugsweise ein unregelmäßiges Viereck ist.

5. Exoskelett (20) nach Anspruch 3 oder 4, wobei
- ein Verhältnis eines Abstands zwischen den Drehachsen (242, 243) des zweiten Haupt-Drehlagers (222) und des dritten Haupt-Drehlagers (223) zu einem Abstand zwischen den Drehachsen (242, 241) des zweiten Haupt-Drehlagers (222) und des ersten Haupt-Drehlagers (221) zwischen 0,75 und 1 beträgt, und/oder
- ein Verhältnis eines Abstands zwischen den Drehachsen (242, 252) des zweiten Haupt-Drehlagers (222) und des zweiten Neben-Drehlagers (232) zu einem Abstand zwischen den Drehachsen (241, 251) des ersten Haupt-Drehlagers (221) und des ersten Neben-Drehlagers (231) 1 beträgt, und/oder
- ein Verhältnis eines Abstands zwischen den Drehachsen (242, 252) des zweiten Haupt-Drehlagers (222) und des zweiten Neben-Drehlagers (232) zu einem Abstand zwischen den Drehachsen (243, 254) des dritten Haupt-Drehlagers (223) und des vierten Neben-Drehlagers (234) 1 beträgt, und/oder
- ein Verhältnis eines Abstands zwischen den Drehachsen (242, 252) des zweiten Haupt-Drehlagers (222) und des zweiten Neben-Drehlagers (232) zu einem Abstand zwischen den Drehachsen (242, 253) des zweiten Haupt-Drehlagers (222) und des dritten Neben-Drehlagers (233) zwischen 0,85 und 1 beträgt, und/oder
- ein Verhältnis des Abstands zwischen den Drehachsen (241, 242) des ersten Haupt-Drehlagers (221) und des zweiten Haupt-Drehlagers (222) zu einem Abstand zwischen den Drehachsen (251, 252) des ersten Neben-Drehlagers (231) und des zweiten Neben-Drehlagers (232) 1 beträgt, und/oder
- ein Verhältnis des Abstands zwischen den Drehachsen (242, 243) des zweiten Haupt-Drehlagers (222) und des dritten Haupt-Drehlagers (223) zu einem Abstand zwischen den Drehachsen (253, 254) des dritten Neben-Drehlagers (233) und des vierten Neben-Drehlagers (234) zwischen 0,9 und 1 beträgt.

6. Exoskelett (20) nach einem der Ansprüche 3 bis 5, wobei das erste Haupt-Gelenkelement (211) und/oder das zweite Neben-Gelenkelement (214) vertikal versetzt zum zweiten Haupt-Gelenkelement (212) angeordnet sind, so dass die Gelenkkette (201) in eine Einklapp-Stellung versetzbar ist, in der ein Schwenkwinkel zwischen dem ersten Haupt-Gelenkelement (211) und dem zweiten Haupt-Gelenkelement (212) minimal ist und das erste Haupt-Gelenkelement (211) und/oder das zweite Neben-Gelenkelement (214) mit mehr als der Hälfte der jeweiligen Längserstreckung horizontal mit dem zweiten Haupt-Gelenkelement (211) überlappt und/oder sich das erste Haupt-Drehlager (221 direkt neben dem dritten Haupt-Drehlager (223) befindet.

7. Exoskelett (20) nach einem voranstehenden Anspruch, ferner umfassend einen Verstellmechanismus (206), über den die Schultergelenkanordnung (9) in einer Verstellrichtung (207) relativ zum Basisabschnitt (1) positionierbar ist, um das Exoskelett (20) an eine Schulterbreite des Anwenders anzupassen.

8. Exoskelett (20) nach Anspruch 7, wobei die Schultergelenkanordnung (9) eine erste Schultergelenkanordnung (9A), der Verstellmechanismus (206) ein erster Verstellmechanismus (206A) und die Verstellrichtung (207) eine erste Verstellrichtung (207A) ist und wobei das Exoskelett (20) ferner eine zweite Schultergelenkanordnung (9B) und einen zweiten Verstellmechanismus (207B) umfasst, über den die zweite Schultergelenkanordnung (9B) in einer zweiten Verstellrichtung (207B) relativ zum Basisabschnitt (1) positionierbar ist, wobei sich die erste Verstellrichtung (207A) und die zweite Verstellrichtung (207B) unter einem stumpfen Winkel, insbesondere unter einem Winkel kleiner als 150 Grad oder kleiner als 135 Grad oder kleiner als 125 Grad und/oder unter einem Winkel größer als 90 Grad oder größer als 105 Grad oder größer als 115 Grad, beispielsweise unter einem Winkel von 120 Grad, schneiden.

9. Exoskelett (20) nach einem voranstehenden Anspruch, wobei das Exoskelett (20) durch Umklappen der Schultergelenkanordnung (9) relativ zum Basisabschnitt (1) und/oder durch Verfahren eines an dem Basisabschnitt (1) angeordneten, insbesondere zu einem Beckengurt (16) des Exoskeletts (20) führenden Kraftübertragungselements (18) wahlweise in eine Verstaukonfiguration oder eine Betriebskonfiguration versetzbar ist, wobei das Exoskelett (20) in der Verstaukonfiguration kompakter ist, und insbesondere eine geringere Breite und/oder Höhe aufweist, als in der Betriebskonfiguration und zweckmäßigerweise in der Verstaukonfiguration nicht bestimmungsgemäß von einem Anwender als Exoskelett (20) anlegbar ist.

10. Exoskelett (20) nach Anspruch 9, ferner umfassend einen Verriegelungsmechanismus (208), der das Exoskelett (20) in der Betriebskonfiguration verriegelt, so dass ein Entriegeln des Verriegelungsmechanismus erforderlich ist, um das Exoskelett in die Verstaukonfiguration zu versetzen.

11. Exoskelett (20) nach Anspruch 9 oder 10, wobei der Verriegelungsmechanismus (208) die Schultergelenkanordnung (9) des Exoskeletts (20) in der Betriebskonfiguration verriegelt und so das Umklappen der Schultergelenkanordnung (9) in die Verstaukonfiguration verhindert.

12. Exoskelett nach Anspruch 10 oder 11, wobei die Schultergelenkanordnung (9) ein erstes Neben-Drehlager (231), ein zweites Neben-Drehlager (232), sowie ein von dem ersten Neben-Drehlager (231) zu dem zweiten Neben-Drehlager (232) verlaufendes erstes Neben-Gelenkelement (213) umfasst, und wobei durch Entriegelung des Verriegelungsmechanismus (208) das erste Neben-Gelenkelement (213) verlängerbar und/oder entkoppelbar ist, um das Umklappen der Schultergelenkanordnung (9) relativ zum Basisabschnitt (1) zu ermöglichen.

13. Exoskelett (20) nach einem der Ansprüche 9 bis 12, ferner umfassend einen Kraftübertragungselement-Verriegelungsmechanismus, der das Kraftübertragungselement (18) in der Betriebskonfiguration verriegelt und so das Verfahren des Kraftübertragungselements (18) in die Verstaukonfiguration verhindert.

14. Exoskelett (20) nach einem voranstehenden Anspruch, wobei der Unterstützungsabschnitt (3) in einer mit seiner Unterstützungsabschnitt-Längsachse (261) maximal nach unten gerichteten Stellung mit seiner Unterstützungsabschnitt-Längsachse (261) gegenüber einer Vertikalachse (262) des Exoskeletts (20) um einen Winkel, insbesondere einen Abduktionswinkel, größer null in Breitenrichtung (y) des Exoskeletts (20) seitlich nach außen ausgerichtet ist, so dass ein Abstand in Breitenrichtung (y) zwischen der Unterstützungsabschnitt-Längsachse (261) und der Vertikalachse (262) in Richtung vertikal nach unten zunimmt.

15. Verfahren zum Betreiben eines Exoskeletts (20) nach einem der voranstehenden Ansprüche, umfassend den Schritt: Bewegen des Hebe-Drehlagers (34) entlang der Bewegungsbahn (202) relativ zum Basisabschnitt (1).

## Claims

1. Exoskeleton (20), comprising:
- a base section (1) for attachment to a torso (2) of a human body,
- a support section (3) for supporting an arm (4) of the human body,
- an actuator device (5), in particular a pneumatic actuator device, acting on the support section (3) for providing a support force for the arm (4), and
- a shoulder joint arrangement (9) via which the support section (3) is movably coupled to the base section (1), wherein
- the shoulder joint arrangement (9) comprises a lifting pivot bearing (34), via which the support section (3) is mounted on the shoulder joint arrangement (9) so as to be pivotable about a horizontal lifting axis (36), and
- the shoulder joint arrangement (9) further comprises a joint chain which defines a curved movement path (202) for the lifting pivot bearing (34), in particular lying in a horizontal plane, relative to the base section (1), wherein the movement path (202) has a curvature changing along the movement path (202), so that the movement path (202) is not circular segment shaped.

2. Exoskeleton (20) according to a preceding claim, wherein the joint chain (201) is designed to pivot the lifting pivot bearing (34) about an imaginary vertical axis of rotation extending through the lifting pivot bearing (34) as a function of a path position of the lifting pivot bearing (34) on the movement path (202), so that, by performing a movement of the lifting pivot bearing (34) along the movement path (202), the support section (3) can be pivoted horizontally with respect to the base section (1), and/or wherein the joint chain (201) is designed to guide the lifting pivot bearing (34) on the movement path (202) in such a way that the lifting axis (36) is aligned along the movement path (202), in particular along the entire movement path (202), correspondingly, in particular coaxially, to a horizontal shoulder joint axis (203) of a shoulder of a user wearing the exoskeleton (20), and/or wherein a movement along the movement path (202) during operation of the exoskeleton (20) is the only degree of freedom for positioning the lifting pivot bearing (34) relative to the base section (1), and/or wherein the exoskeleton (20) defines a free space (205) which, in the worn state of the exoskeleton (20), is located above the shoulder of the user wearing the exoskeleton (20) and around which the joint chain (201) extends, so that the user can direct his arm supported by the support section (3) upwards, in particular above shoulder height, preferably vertically upwards, through the free space past the joint chain (201).

3. Exoskeleton (20) according to a preceding claim, wherein the joint chain (201) comprises a first main joint element (211), a first auxiliary joint element (213), a second main joint element (212), a second auxiliary joint element (214) and a shoulder part (29) comprising the lifting pivot bearing (34), as well as a first main pivot bearing (221), via which the first main joint element (211) is rotatably mounted relative to the base section (1), a first auxiliary pivot bearing (231), via which the first auxiliary joint element (213) is rotatably mounted relative to the base section (1), a second main pivot bearing (222), via which the second main joint element (212) is rotatably mounted on the first main joint element (211), a second auxiliary pivot bearing (232), via which the second main joint element (212) is rotatably mounted on the first auxiliary joint element (213), a third auxiliary pivot bearing (233), via which the second auxiliary joint element (214) is rotatably mounted on the first main joint element (211), a third main pivot bearing (223) via which the shoulder part (29) is rotatably mounted on the second main joint element (212), and a fourth auxiliary pivot bearing (234) via which the shoulder part (29) is rotatably mounted on the second auxiliary joint element (214).

4. Exoskeleton (20) according to claim 3, wherein the axes of rotation of the second main pivot bearing (222), the third main pivot bearing (223), the third auxiliary pivot bearing (233) and the fourth auxiliary pivot bearing (234) lie on corners of an imaginary quadrilateral which is not a parallelogram and is preferably an irregular quadrilateral.

5. Exoskeleton (20) according to claim 3 or 4, wherein
- a ratio of a distance between the rotational axes (242, 243) of the second main pivot bearing (222) and the third main pivot bearing (223) to a distance between the rotational axes (242, 241) of the second main pivot bearing (222) and the first main pivot bearing (221) is between 0.75 and 1, and/or
- a ratio of a distance between the rotational axes (242, 252) of the second main pivot bearing (222) and the second auxiliary pivot bearing (232) to a distance between the rotational axes (241, 251) of the first main pivot bearing (221) and the first auxiliary pivot bearing (231) is 1, and/or
- a ratio of a distance between the rotational axes (242, 252) of the second main pivot bearing (222) and the second auxiliary pivot bearing (232) to a distance between the rotational axes (243, 254) of the third main pivot bearing (223) and the fourth auxiliary pivot bearing (234) is 1, and/or
- a ratio of a distance between the rotational axes (242, 252) of the second main pivot bearing (222) and the second auxiliary pivot bearing (232) to a distance between the rotational axes (242, 253) of the second main pivot bearing (222) and the third auxiliary pivot bearing (233) is between 0.85 and 1, and/or
- a ratio of the distance between the axes of rotation (241, 242) of the first main pivot bearing (221) and the second main pivot bearing (222) to a distance between the axes of rotation (251, 252) of the first auxiliary pivot bearing (231) and the second auxiliary pivot bearing (232) is 1, and/or
- a ratio of the distance between the axes of rotation (242, 243) of the second main pivot bearing (222) and the third main pivot bearing (223) to a distance between the axes of rotation (253, 254) of the third auxiliary pivot bearing (233) and the fourth auxiliary pivot bearing (234) is between 0.9 and 1.

6. Exoskeleton (20) according to any one of claims 3 to 5, wherein the first main joint element (211) and/or the second auxiliary joint element (214) are arranged vertically offset to the second main joint element (212), so that the joint chain (201) is displaceable into a fold-in position, in which a pivot angle between the first main joint element (211) and the second main joint element (212) is minimal and the first main joint element (211) and/or the second auxiliary joint element (214) overlaps horizontally with the second main joint element (211) with more than half of the respective longitudinal extension and/or the first main pivot bearing (221) is located directly next to the third main pivot bearing (223).

7. Exoskeleton (20) according to a preceding claim, further comprising an adjustment mechanism (206) via which the shoulder joint arrangement (9) can be positioned in an adjustment direction (207) relative to the base section (1) in order to adapt the exoskeleton (20) to a shoulder width of the user.

8. Exoskeleton (20) according to claim 7, wherein the shoulder joint arrangement (9) is a first shoulder joint arrangement (9A), the adjustment mechanism (206) is a first adjustment mechanism (206A) and the adjustment direction (207) is a first adjustment direction (207A), and wherein the exoskeleton (20) further comprises a second shoulder joint arrangement (9B) and a second adjustment mechanism (207B), via which the second shoulder joint arrangement (9B) can be positioned in a second adjustment direction (207B) relative to the base section (1), wherein the first adjustment direction (207A) and the second adjustment direction (207B) intersect at an obtuse angle, in particular at an angle of less than 150 degrees or less than 135 degrees or less than 125 degrees and/or at an angle greater than 90 degrees or greater than 105 degrees or greater than 115 degrees, for example at an angle of 120 degrees.

9. Exoskeleton (20) according to a preceding claim, wherein the exoskeleton (20) is selectively movable into a stowage configuration or an operating configuration by folding the shoulder joint arrangement (9) relative to the base section (1) and/or by moving a force transmission element (18) arranged on the base section (1) and leading in particular to a pelvic strap (16) of the exoskeleton (20), wherein the exoskeleton (20) is more compact in the stowage configuration and, in particular, has a smaller width and/or height than in the operating configuration and, expediently, cannot be put on as an exoskeleton (20) by a user as intended in the stowage configuration.

10. Exoskeleton (20) of claim 9, further comprising a locking mechanism (208) that locks the exoskeleton (20) in the operating configuration such that unlocking the locking mechanism is required to place the exoskeleton in the stowage configuration.

11. Exoskeleton (20) according to claim 9 or 10, wherein the locking mechanism (208) locks the shoulder joint arrangement (9) of the exoskeleton (20) in the operating configuration, thereby preventing the shoulder joint arrangement (9) from folding over into the stowage configuration.

12. Exoskeleton according to claim 10 or 11, wherein the shoulder joint arrangement (9) comprises a first auxiliary pivot bearing (231), a second auxiliary pivot bearing (232), and a first auxiliary joint element (213) extending from the first auxiliary pivot bearing (231) to the second auxiliary pivot bearing (232), and wherein, by unlocking the locking mechanism (208), the first auxiliary joint element (213) can be extended and/or decoupled in order to enable the shoulder joint arrangement (9) to be folded over relative to the base section (1).

13. Exoskeleton (20) according to any one of claims 9 to 12, further comprising a force transmission element locking mechanism that locks the force transmission element (18) in the operating configuration and thus prevents the force transmission element (18) from moving to the stowage configuration.

14. Exoskeleton (20) according to a preceding claim, wherein the support section (3), in a position with its support section longitudinal axis (261) directed maximally downwards, is oriented with its support section longitudinal axis (261) laterally outwards relative to a vertical axis (262) of the exoskeleton (20) by an angle, in particular an abduction angle, greater than zero in the width direction (y) of the exoskeleton (20), so that a distance in the width direction (y) between the support section longitudinal axis (261) and the vertical axis (262) increases in the vertically downward direction.

15. Method for operating an exoskeleton (20) according to any of the preceding claims, comprising the step of: moving the lifting pivot bearing (34) along the movement path (202) relative to the base section (1).

## Revendications

1. Exosquelette (20), comprenant :
- une section de base (1) destinée à être installée sur un torse (2) d'un corps humain,
- une section de support (3) destinée à soutenir un bras (4) du corps humain,
- un dispositif d'actionnement (5), en particulier pneumatique, agissant sur la section de support (3), destiné à fournir une force de support au bras (4), et
- un ensemble d'articulation d'épaule (9) par l'intermédiaire duquel la section de support (3) est couplée de manière mobile à la section de base (1), dans lequel
- l'ensemble d'articulation d'épaule (9) comprend un palier rotatif de levage (34), par l'intermédiaire duquel la section de support (3) est montée de manière à pouvoir pivoter autour d'un axe de levage horizontal (36) sur l'ensemble d'articulation d'épaule (9), et
- l'ensemble d'articulation d'épaule (9) comprend en outre une chaîne articulée qui définit pour le palier rotatif de levage (34) une trajectoire de déplacement (202) courbée, située en particulier dans un plan horizontal, par rapport à la section de base (1), dans lequel la trajectoire de déplacement (202) présente une courbure variant le long de la trajectoire de déplacement (202) de telle sorte que la trajectoire de déplacement (202) ne présente pas une forme de section circulaire.

2. Exosquelette (20) selon la revendication précédente, dans lequel la chaîne articulée (201) est réalisée pour faire pivoter le palier rotatif de levage (34) en fonction d'une position de trajectoire du palier rotatif de levage (34) sur la trajectoire de déplacement (202) autour d'un axe de rotation vertical imaginaire s'étendant à travers le palier rotatif de levage (34) de telle sorte que la section de support (3) peut être pivotée horizontalement par rapport à la section de base (1) en effectuant un déplacement du palier rotatif de levage (34) ayant lieu le long de la trajectoire de déplacement (202), et/ou dans lequel la chaîne articulée (201) est réalisée pour guider le palier rotatif de levage (34) de telle manière sur la trajectoire de déplacement (202) que l'axe de levage (36) est orienté le long de la trajectoire de déplacement (202), en particulier le long de toute la trajectoire de déplacement (202), de manière correspondante, en particulier de manière coaxiale, par rapport à un axe d'articulation d'épaule horizontal (203) d'une épaule d'un utilisateur portant l'exosquelette (20), et/ou dans lequel un déplacement le long de la trajectoire de déplacement (202) est lors du fonctionnement de l'exosquelette (20) le seul degré de liberté pour positionner le palier rotatif de levage (34) par rapport à la section de base (1), et/ou dans lequel l'exosquelette (20) définit un espace libre (205) qui, à l'état porté de l'exosquelette (20), se trouve au-dessus de l'épaule de l'utilisateur portant l'exosquelette (20) et s'étend autour de la chaîne articulée (201) de telle sorte que l'utilisateur peut orienter, à travers l'espace libre le long de la chaîne articulée (201), son bras soutenu par la section de support (3) vers le haut, en particulier au-delà de la hauteur des épaules, de préférence verticalement vers le haut.

3. Exosquelette (20) selon la revendication précédente, dans lequel la chaîne articulée (201) présente un premier élément d'articulation principal (211), un premier élément d'articulation secondaire (213), un deuxième élément d'articulation principal (212), un deuxième élément d'articulation secondaire (214) et une partie d'épaule (29) comprenant le palier rotatif de levage (34), ainsi qu'un premier palier rotatif principal (221), par l'intermédiaire duquel le premier élément d'articulation principal (211) est monté de manière rotative par rapport à la section de base (1), un premier palier rotatif secondaire (231), par l'intermédiaire duquel le premier élément d'articulation secondaire (213) est monté de manière rotative par rapport à la section de base (1), un deuxième palier rotatif principal (222), par l'intermédiaire duquel le deuxième élément d'articulation principal (212) est monté en rotation sur le premier élément d'articulation principal (211), un deuxième palier rotatif secondaire (232), par l'intermédiaire duquel le deuxième élément d'articulation principal (212) est monté de manière rotative sur le premier élément d'articulation secondaire (213), un troisième palier rotatif secondaire (233), par l'intermédiaire duquel le deuxième élément d'articulation secondaire (214) est monté de manière rotative sur le premier élément d'articulation principal (211), un troisième palier rotatif principal (223), par l'intermédiaire duquel la partie d'épaule (29) est montée de manière rotative sur le deuxième élément d'articulation principal (212), et un quatrième palier rotatif secondaire (234), par l'intermédiaire duquel la partie d'épaule (29) est montée de manière rotative sur le deuxième élément d'articulation secondaire (214).

4. Exosquelette (20) selon la revendication 3, dans lequel les axes de rotation du deuxième palier rotatif principal (222), du troisième palier rotatif principal (223), du troisième palier rotatif secondaire (233) et du quatrième palier rotatif secondaire (234) se situent sur les coins d'un quadrilatère imaginaire qui n'est pas un parallélogramme et est de préférence un quadrilatère irrégulier.

5. Exosquelette (20) selon la revendication 3 ou 4, dans lequel
- un rapport d'une distance entre les axes de rotation (242, 243) du deuxième palier rotatif principal (222) et du troisième palier rotatif principal (223) par rapport à une distance entre les axes de rotation (242, 241) du deuxième palier rotatif principal (222) et du premier palier rotatif principal (221) est compris entre 0,75 et 1, et/ou
- un rapport d'une distance entre les axes de rotation (242, 252) du deuxième palier rotatif principal (222) et du deuxième palier rotatif secondaire (232) par rapport à une distance entre les axes de rotation (241, 251) du premier palier rotatif principal (221) et du premier palier rotatif secondaire (231) est de 1, et/ou
- un rapport d'une distance entre les axes de rotation (242, 252) du deuxième palier rotatif principal (222) et du deuxième palier rotatif secondaire (232) par rapport à une distance entre les axes de rotation (243, 254) du troisième palier rotatif principal (223) et du quatrième palier rotatif secondaire (234) est de 1, et/ou
- un rapport d'une distance entre les axes de rotation (242, 252) du deuxième palier rotatif principal (222) et du deuxième palier rotatif secondaire (232) par rapport à une distance entre les axes de rotation (242, 253) du deuxième palier rotatif principal (222) et du troisième palier rotatif secondaire (233) est compris entre 0,85 et 1, et/ou
- un rapport de la distance entre les axes de rotation (241, 242) du premier palier rotatif principal (221) et du deuxième palier rotatif principal (222) par rapport à une distance entre les axes de rotation (251, 252) du premier palier rotatif secondaire (231) et du deuxième palier rotatif secondaire (232) est de 1, et/ou
- un rapport de la distance entre les axes de rotation (242, 243) du deuxième palier rotatif principal (222) et du troisième palier rotatif principal (223) par rapport à une distance entre les axes de rotation (253, 254) du troisième palier rotatif secondaire (233) et du quatrième palier rotatif secondaire (234) est compris entre 0,9 et 1.

6. Exosquelette (20) selon l'une quelconque des revendications 3 à 5, dans lequel le premier élément d'articulation principal (211) et/ou le deuxième élément d'articulation secondaire (214) sont disposés de manière décalée verticalement par rapport au deuxième élément d'articulation principal (212) de telle sorte que la chaîne articulée (201) peut être décalée dans une position de rabattement dans laquelle un angle de pivotement entre le premier élément d'articulation principal (211) et le deuxième élément d'articulation principal (212) est minimal et le premier élément d'articulation principal (211) et/ou le deuxième élément d'articulation secondaire (214) chevauchent avec plus de la moitié de l'extension longitudinale respective horizontalement le deuxième élément d'articulation principal (211) et/ou le premier palier rotatif principal (221) se trouve directement à côté du troisième palier rotatif principal (223).

7. Exosquelette (20) selon la revendication précédente, comprenant en outre un mécanisme d'ajustement (206) qui permet de positionner l'ensemble d'articulation d'épaule (9) dans une direction d'ajustement (207) par rapport à la section de base (1) pour adapter l'exosquelette (20) à une largeur d'épaule de l'utilisateur.

8. Exosquelette (20) selon la revendication 7, dans lequel l'ensemble d'articulation d'épaule (9) est un premier ensemble d'articulation d'épaule (9A), le mécanisme d'ajustement (206) est un premier mécanisme d'ajustement (206A) et la direction d'ajustement (207) est une première direction d'ajustement (207A), et dans lequel l'exosquelette (20) comprend en outre un deuxième ensemble d'articulation d'épaule (9B) et un deuxième mécanisme d'ajustement (207B) par l'intermédiaire duquel le deuxième ensemble d'articulation d'épaule (9B) peut être positionné dans une deuxième direction d'ajustement (207B) par rapport à la section de base (1), dans lequel la première direction d'ajustement (207A) et la deuxième direction d'ajustement (207B) se coupent selon un angle obtus, en particulier sous un angle inférieur à 150 degrés ou inférieur à 135 degrés ou inférieur à 125 degrés et/ou selon un angle supérieur à 90 degrés ou supérieur à 105 degrés ou supérieur à 115 degrés, par exemple selon un angle de 120 degrés.

9. Exosquelette (20) selon la revendication précédente, dans lequel l'exosquelette (20) peut être déplacé, au choix, dans une configuration de rangement ou une configuration de fonctionnement en rabattant l'ensemble d'articulation d'épaule (9) par rapport à la section de base (1) et/ou en déplaçant un élément de transmission de force (18) disposé sur la section de base (1), menant en particulier à une sangle abdominale (16) de l'exosquelette (20), dans lequel l'exosquelette (20) est plus compact dans la configuration de rangement et présente en particulier une largeur et/ou une hauteur inférieures à celles qui ne peuvent pas être appliquées comme prévu par un utilisateur en tant qu'exosquelette (20) dans la configuration de fonctionnement et, de manière appropriée, dans la configuration de rangement.

10. Exosquelette (20) selon la revendication 9, comprenant en outre un mécanisme de verrouillage (208) qui verrouille l'exosquelette (20) dans la configuration de fonctionnement de telle sorte qu'un déverrouillage du mécanisme de verrouillage est nécessaire pour placer l'exosquelette dans la configuration de rangement.

11. Exosquelette (20) selon la revendication 9 ou 10, dans lequel le mécanisme de verrouillage (208) verrouille l'ensemble d'articulation d'épaule (9) de l'exosquelette (20) dans la configuration de fonctionnement, empêchant ainsi le basculement de l'ensemble d'articulation d'épaule (9) dans la configuration de rangement.

12. Exosquelette selon la revendication 10 ou 11, dans lequel l'ensemble d'articulation d'épaule (9) comprend un premier palier rotatif secondaire (231), un deuxième palier rotatif secondaire (232), ainsi qu'un premier élément d'articulation secondaire (213) s'étendant du premier palier rotatif secondaire (231) au deuxième palier rotatif secondaire (232), et dans lequel le déverrouillage du mécanisme de verrouillage (208) permet d'allonger et/ou de désaccoupler le premier élément d'articulation secondaire (213) pour permettre le basculement de l'ensemble d'articulation d'épaule (9) par rapport à la section de base (1).

13. Exosquelette (20) selon l'une quelconque des revendications 9 à 12, comprenant en outre un mécanisme de verrouillage d'élément de transmission de force qui verrouille l'élément de transmission de force (18) dans la configuration de fonctionnement et empêche ainsi le déplacement de l'élément de transmission de force (18) dans la configuration de rangement.

14. Exosquelette (20) selon la revendication précédente, dans lequel la section de support (3) est orientée latéralement vers l'extérieur dans une position orientée au maximum vers le bas avec son axe longitudinal de section de support (261) avec son axe longitudinal de section de support (261) par rapport à un axe vertical (262) de l'exosquelette (20) d'un angle, en particulier d'un angle d'abduction, supérieur à zéro dans la direction de largeur (y) de l'exosquelette (20), de telle sorte qu'une distance dans la direction de largeur (y) entre l'axe longitudinal de la section de support (261) et l'axe vertical (262) augmente dans la direction verticalement vers le bas.

15. Procédé destiné à faire fonctionner un exosquelette (20) selon l'une quelconque des revendications précédentes, comprenant l'étape de : déplacement du palier rotatif de levage (34) le long de la trajectoire de déplacement (202) par rapport à la section de base (1).
